(19) Europäisches Patentamt
European Patent Office
Office européen des brevets

(11) EP 0 692 498 A1

(12) **EUROPEAN PATENT APPLICATION**

(43) Date of publication:
**17.01.1996 Bulletin 1996/03**

(51) Int. Cl.$^6$: **C08F 10/00**, C08F 4/68

(21) Application number: **94110902.7**

(22) Date of filing: **13.07.1994**

(84) Designated Contracting States:
**DE ES GB IT NL**

(71) Applicant: **QUANTUM CHEMICAL CORPORATION**
**Cincinnati, OH 45249 (US)**

(72) Inventors:
- **Oaks, Chi-I**
**Humble, Texas 77346 (US)**
- **Lynch, Michael W.**
**West Chester, Ohio 45069 (US)**

(74) Representative: **Grünecker, Kinkeldey,**
**Stockmair & Schwanhäusser**
**Anwaltssozietät**
**D-80538 München (DE)**

# (54) Vanadium-containing polymerization catalyst

(57) Catalysts useful in the polymerization of olefins, especially ethylene, are disclosed. One of the catalyst is obtained by admixing a vanadium composition with an activator. The catalyst may further comprise a zirconium composition and/or a titanium composition. These catalysts may be combined with a co-catalyst and, optionally, a modifier to yield an olefin polymerization system. The catalyst exhibits extremely high activity, good hydrogen response and produces polymers having broad molecular weight distribution ("MWD") and manifesting bimodal MWD profile.

EP 0 692 498 A1

## Description

The instant invention is directed to catalysts useful in the polymerization of olefins, particularly homopolymerization and copolymerization involving ethylene. Specifically, the instant invention is directed to catalysts comprised of a vanadium composition and an activator. The aforementioned catalysts may further comprise a zirconium composition and a titanium composition. The instant invention is particularly useful in producing an ethylene homopolymer having a broad molecular weight distribution (MWD), a bimodal molecular weight distribution profile, and a unique combination of physical properties, all in a single reactor.

The polymerization of olefins using transition metal catalysts is well established in the art. Polymerizations employing these catalysts produce polyolefins possessing desired characteristics in high yield, usually at processing conditions of low temperature and low pressure, thus making these catalysts the subject of much research. An especially important class of catalysts where improvement is sought is that class of catalysts which produce ethylenic and/or alpha-olefinic polymers, particularly the commercially important polymer, polyethylene.

Of practical interest is the development of a catalyst which will yield polymer adaptable for use in high strength films and light weight blow molding resins. Generally, these characteristics are indicative of a polymer having a broad molecular weight distribution. The usual measure of the dispersity of the molecular weight distribution in the art has been the ratio of the weight average molecular weight to the number average molecular weight. A distribution is said to be narrow if for a given polymer type of constant average molecular weight, the number average molecular weight is substantially the same as the weight average molecular weight. As the ratio of weight average molecular weight to number average molecular weight increases from over 1:1, the distribution becomes broad. Generally, as the distribution becomes broad, film strength and resin processability improve. Thus in applications where these traits are of concern, a broad molecular weight distribution is desirable.

To further modify the physical characteristics and performance properties of a polymer, the shape of the molecular weight distribution curve can be varied. One technique of varying the molecular weight so that it becomes broadened is by making the distribution polymodal, i.e., making the polymer appear as though it consists of two (bimodal) or three (trimodal) distinct polymers. By controlling the location and concentration of the modes, the molecular weight distribution may be varied and different processing and end-use properties may be obtained. To achieve these results special catalyst systems must be used.

To attain these properties, as desired, the common practice heretofore has entailed the use of multiple reactors, such as in a cascade system, and, as necessary, the employment of different catalysts in the reactor sequence so to produce the sought-after polymer characteristics. Because of the complexity and cost of such processing, as correlates for example to the number of reactors required, the necessity of different catalysts etc., the art recognizes a continuing need of producing the aforementioned polymer characteristics without multiple reactors or multiple catalysts.

Though desirable, the art has been unable to develop an entirely satisfactory catalyst able to produce, in a single reactor, a polymer having the requisite properties while at the same time evincing high activity, i.e., leaving low catalyst residue in the product, good hydrogen response (to facilitate control of molecular weight), minimization of low molecular weight tail so as to eliminate odor or smoke problems that often occur in downstream processing, and not requiring a substantial amount of promoter.

New catalysts have now been developed which exhibit high activity and produce, in a single reactor, olefin polymers having a broad molecular weight distribution characterized by a bimodal molecular weight distribution profile. The use of a single reactor alleviates gel problems caused by undispersed resin and is cost effective by eliminating the need to redesign current reactors, employ two or more existing reactors in a cascade system, or to construct a new cascade reactor system. The present invention obtains a polymer having a broad molecular weight distribution with a bimodal characteristic by using a catalyst having two types of active centers: one center having, e.g., a low sensitivity to hydrogen as a chain transfer agent resulting in a very low melt index polymer; the other having, e.g., an extremely high sensitivity to hydrogen resulting in a very high melt index polymer. A catalyst having two types of active centers is denoted in this specification as a dual site catalyst.

In accordance with the instant invention, a catalyst is provided which comprises the product obtained by admixing (a) a vanadium composition of the formula: $VX_b(OR)_{a-b}$ wherein X is halogen, R is hydrocarbyl having 1 to 18 carbon atoms, a is the valence of vanadium and is 3 or 4 and b is 0 or an integer from 1 to a, $VOX^1_c(OR^1)_{3-c}$ wherein $X^1$ is halogen, $R^1$ is hydrocarbyl having 1 to about 18 carbon atoms and c is 0 or an integer from 1 to 3, or $VOX^2_2$ wherein $X_2$ is halogen; and (b) one or more activator compounds having the formula: $ZnX^3_2 \cdot 2AlR^2_3$ wherein $X^3$ is halogen and $R^2$ is hydrocarbyl having from 1 to about 12 carbon atoms;

$$MR^3_dX^4_{3-d}$$

wherein M is aluminum or boron, $X_4$ is halogen, $R^3$ is hydrocarbyl having 1 to about 12 carbon atoms and d is 0 or an integer from 1 to 3, $Al_2R^4_3X^5_3$ wherein $R^4$ is hydrocarbyl having 1 to about 12 carbon atoms and $X^5$ is halogen, or $MgR^5_eY_{2-e}$ wherein $R^5$ is hydrocarbyl having 1 to about 12 carbon atoms, Y is halogen or has the formula $OR^6$ wherein $R^6$ is hydrocarbyl having 1 to about 12 carbon atoms or Y is a silyl amide having the formula $N(SiR^6_3)_2$ wherein $R^6$ is hydrocarbyl having 1 to about 12 carbon atoms and e is 0, 1 or 2.

In accordance with yet another embodiment of the present invention, a catalyst is provided which comprises the product obtained by admixing (a) a zirconium composition having the formula $ZrX^5_f(OR^7)_{4-f}$ wherein $X^5$ is halogen, $R^1$ is hydrocarbyl having 1 to about 18 carbon atoms and f is 0 or an integer from 1 to 4, or mixtures thereof; (b) a vanadium composition selected from the group consisting of compounds having the formula $VX_b(OR)_{a-b}$ wherein X is halogen, R is hydrocarbyl having 1 to about 18 carbon atoms, a is the valence of vanadium and is 3 or 4 and b is 0 or an integer from 1 to a, $VOX^1_c(OR^1)_{3-c}$ wherein X is halogen, $R^1$ is hydrocarbyl having 1 to about 18 carbon atoms and c is 0 or an integer from 1 to 3, or $VOX^2_2$ wherein $X^2$ is halogen, and (c) one or more activator compounds having the formula $ZnX^3_2 \cdot 2AlR^2_3$ wherein $X^3$ is halogen, $R^2$ is hydrocarbyl having 1 to about 12 carbon atoms, or

$$MR^3_dX^4_{3-d}$$

wherein M is aluminum or boron, $X^4$ is halogen, $R^3$ is hydrocarbyl having 1 to about 12 carbon atoms and d is 0 or an integer from 1 to 3, or $Al_2R^4_3X^5_3$ wherein $R^4$ is hydrocarbyl having 1 to about 12 carbon atoms and $X^5$ is halogen, or $MgR^5_eY_{2-e}$ wherein $R^5$ is hydrocarbyl having 1 to about 12 carbon atoms, Y is halogen or has the formula $OR^6$ wherein $R^6$ is hydrocarbyl having 1 to 12 carbon atoms or Y is a silyl amide having the formula $N(SiR^6_3)_2$ wherein $R^6$ is hydrocarbyl having 1 to about 12 carbon atoms and e is 0, 1 or 2, or mixtures thereof.

In accordance with yet another embodiment of the instant invention, a catalyst is provided which comprises the product obtained by admixing (a) a vanadium composition of the formula: $VX_b(OR)_{a-b}$ wherein x is halogen, R is hydrocarbyl having 1 to 18 carbon atoms, a is the valence of vanadium and is 3 or 4 and b is 0 or an integer from 1 to a, $VOX^1_c(OR^1)_{3-c}$ wherein $X^1$ is halogen, $R^1$ is hydrocarbyl having 1 to about 18 carbon atoms and c is 0 or an integer from 1 to 3, or $VOX^2_2$ wherein $X_2$ is halogen; (b) one or more activator compound having the formula: $ZnX^3_2 \cdot 2AlR^2_3$ wherein $X_3$ is halogen and $R^2$ is hydrocarbyl having from 1 to about 12 carbon atoms;

$$MR^3_dX_{3-d}^4$$

wherein M is aluminum or boron, $X^4$ is halogen, $R^3$ is hydrocarbyl having 1 to about 12 carbon atoms and d is 0 or an integer from 1 to 3, $Al_2R^4_3X^5_3$ wherein $R^4$ is hydrocarbyl having 1 to about 12 carbon atoms and $X^5$ is halogen, or $MgR^5_eY_{2-e}$ wherein $R^5$ is hydrocarbyl having 1 to about 12 carbon atoms, Y is halogen or has the formula $OR^6$ wherein $R^6$ is hydrocarbyl having 1 to about 12 carbon atoms or Y is a silyl amide having the formula $N(SiR_6)_2$ wherein $R^6$ is hydrocarbyl having 1 to about 12 carbon atoms and e is 0, 1 or 2; and (c) a titanium composition having (i) the formula $TiX^6_g(OR^8)_{h-g}$ wherein $X^6$ is halogen, $R^8$ is hydrocarbyl having 1 to about 18 carbon atoms, h is the valence of titanium and is 3 or 4 and g is 0 or an integer from 1 to h, (ii) having been obtained by admixing said titanium composition (i) with $MgX^7_2 6H_2O$ and Mg metal wherein $X_7$ is halogen, (iii) having been obtained by admixing said titanium composition (i) with a compound having the formula: $R^9$-Mg-N(-$R^{11}$)-Si($R^{10}$)$_3$ or $R^9$-Mg-N (-$R^{11}$)-Si($R^{10}$)$_2$-N(-$R^{11}$)-Mg-$R^9$ wherein $R^9$ is straight or branched alkyl having 1 to 18 carbon atoms or aryl having 6 to 14 carbon atoms, $R^{10}$ is hydrogen, straight or branched alkyl having 1 to 18 carbon atoms or aryl having 6 to 14 carbon atoms and $R^{11}$ is straight or branched alkyl having 1 to 18 carbon atoms, aryl having 6 to 14 carbon atoms, or -Si($R^{10}$)$_3$, and all $R^{10}$, $R^{11}$ and $R^{12}$ groups are the same or different.

The present invention also provides a catalyst comprising the product obtained by admixing: (a) a vanadium composition of the formula: $VX_b(OR)_{a-b}$ wherein X is halogen, R is hydrocarbyl having 1 to 18 carbon atoms, a is the valence of vanadium and is 3 or 4 and b is 0 or an integer from 1 to a, $VOX^1_c(OR^1)_{3-c}$ wherein $X^1$ is halogen, $R^1$ is hydrocarbyl having 1 to about 18 carbon atoms and c is 0 or an integer from 1 to 3, or $VOX^2{}_2$ wherein $X_2$ is halogen; (b) one or more activator compounds having the formula: $ZnX^3_2 \cdot 2AlR^2_3$ wherein $X^3$ is halogen and $R^2$ is hydrocarbyl having from 1 to about 12 carbon atoms;

$$MR^3_dX_{3-d}^4$$

wherein M is aluminum or boron, $X^4$ is halogen, $R^3$ is hydrocarbyl having 1 to about 12 carbon atoms and d is 0 or an integer from 1 to 3, $Al_2R^4_3X^5_3$ wherein $R^4$ is hydrocarbyl having 1 to about 12 carbon atoms and $X^5$ is halogen, or $MgR^5_eY_{2-}$

$_e$ wherein $R^5$ is hydrocarbyl having 1 to about 12 carbon atoms, Y is halogen or has the formula $OR^6$ wherein $R^6$ is hydrocarbyl having 1 to about 12 carbon atoms or Y is a silyl amide having the formula $N(SiR^6_3)_2$ wherein $R^6$ is hydrocarbyl having 1 to about 12 carbon atoms and e is 0, 1 or 2, (c) a zirconium composition having the formula: $ZrX^5_f(OR^7)_{4-f}$ wherein $X^5$ is halogen, $R^1$ is hydrocarbyl having 1 to about 18 carbon atoms and f is 0 or an integer from 1 to 4; and (d) a titanium composition having (i) the formula $TiX^6_g(OR^8)_{h-g}$ wherein $X^6$ is halogen, $R^8$ is hydrocarbyl having 1 to about 18 carbon atoms, h is the valence of titanium and is 3 or 4 and g is 0 or an integer from 1 to h, (ii) having been obtained by admixing said titanium composition (i) with $MgX^7_2 \cdot 6H_2O$ and Mg metal wherein $X_7$ is halogen, (iii) having been obtained by admixing said titanium composition (i) with a compound having the formula: $R^9$-Mg-N(-$R^{11}$)-Si($R^{10}$)$_3$ or $R^9$-Mg-N(-$R^{11}$)-Si($R^{10}$)$_2$-N(-$R^{11}$)-Mg-$R^9$ wherein $R^9$ is straight or branched alkyl having 1 to 18 carbon atoms or aryl having 6 to 14 carbon atoms, $R^{10}$ is hydrogen, straight or branched alkyl having 1 to 18 carbon atoms or aryl having 6 to 14 carbon atoms and $R^{11}$ is straight or branched alkyl having 1 to 18 carbon atoms, aryl having 6 to 14 carbon atoms, or -Si($R^{10}$)$_3$, and all $R^{10}$, $R^{11}$ and $R^{12}$ groups are the same or different.

In further accordance with the present invention, an olefin polymerization process is provided.

In this process, olefins such as ethylene and/or one or more alpha-olefins are contacted with one of the above-defined catalysts, a co-catalyst and, optionally, a modifier under polymerization conditions effective to obtain a homopolymer or copolymer.

The olefin polymerization catalyst system of the present invention is useful in gas phase, slurry and solution polymerization processes and finds particular utility in producing ethylene homopolymer, or a copolymer of ethylene and one or more alpha-olefins. The polymer thus produced has high molecular weight and a broad molecular weight distribution.

Figure 1 illustrates the bimodal molecular weight distribution typically obtained in slurry homopolymerization of ethylene utilizing one of the catalysts of the present invention. The catalyst in this particular polymerization was the product obtained by admixing $ZnCl_2 \cdot 2Al(C_2H_5)_3$, $ZrCl_2(OC_4H_9)_2$, and $VO(OC_4H_9)_3$ in a molar ratio of 12:1:5, respectively.

Figure 2 illustrates the broad molecular weight distribution and trimodal characteristic typically obtained in slurry homopolymerization of ethylene utilizing one of the catalysts of the present invention. The catalyst employed comprised the precursor composition obtained by admixing $Ti(OC_2H_9)_4$, magnesium turnings, and magnesium chloride hexahydrate ($MgCl_2 \cdot 6H_2O$); the zirconium composition, $Zr(OC_4H_9)_4$; the vanadium composition, $VOCl_3$; and the activator, $ZnCl_2 \cdot 2Al(C_2H_5)_3$. Additionally, a modifier was used to further control activity and molecular weight distribution. Curve 1 of Figure 2 utilized $CFCl_3$ (Freon 11) as a modifier; Curve 2 utilized chloroform ($CHCl_3$).

In accordance with the present invention novel vanadium-containing catalysts are provided. Although not required in the practice of the present invention, a hydrocarbon solvent may be employed as a medium for the preparation of the catalysts of the instant invention. Non-polar solvents, e.g., alkanes (such as hexane and heptane), cycloalkanes and aromatics are preferred. If a solvent is employed, it is preferred that the solvent is dried in order to remove water. Drying in this regard may be accomplished by techniques known in the art, e.g., by molecular sieve. The solvent may be allowed to remain throughout preparation of the catalyst and can be removed by conventional means, such as decantation, filtration or evaporation.

One of the catalysts of the present invention is the product obtained by admixing a vanadium composition and one or more activators. Another catalyst of the present invention is the product obtained by admixing a zirconium composition, a vanadium composition and an activator. A third catalyst of the present invention is the product obtained by admixing a vanadium composition, a titanium composition and an activator. A forth catalyst of the present invention is the product obtained by admixing a vanadium composition, a zirconium composition a titanium composition and an activator. All of the above-identified compositions employed in the present invention are as defined hereinbelow. It should be appreciated that no particular sequence of admixing is required and that the present invention contemplates simultaneous admixing as well as any combination of sequential admixing.

If other than simultaneous admixing is utilized, no specific time period need elapse between the addition of any one or more of the zirconium composition, vanadium composition, titanium composition and activator. If sequential admixing is employed, it is preferred that about 30 minutes elapse between additions.

Stirring, although not necessary, is also preferred.

The zirconium composition useful in the practice of the present invention has the formula $ZrX^5_f(OR^7)_{4-f}$ wherein $X^5$ is halogen, $R^7$ is hydrocarbyl having 1 to about 18 carbon atoms and f is 0 or an integer from 1 to 4. Preferably, $R^7$ has 2 to about 10 carbon atoms. As a hydrocarbyl, $R^7$ is preferably alkyl, and depending on the number of carbon atoms, cycloalkyl, aryl, aralkyl or alkaryl. $X^5$ is preferably chlorine. Examples of preferred zirconium compositions include $ZrCl_4$, $ZrCl_2(OC_4H_9)_2$, $Zr(OC_3H_7)_4$ and $Zr(OC_4H_9)_4$.

Mixtures of zirconium compositions may also be used in the practice of the present invention.

The vanadium composition useful in the instant invention has the formula $VX_b(OR)_{a-b}$ wherein X is halogen, R is hydrocarbyl having 1 to about 18 carbon atoms, a is the valence of vanadium and is 3 or 4 and b is 0 or an integer from 1 to a. Preferably, R has 2 to about 6 carbon atoms. As a hydrocarbyl, R is preferably alkyl, and depending on the number of carbon atoms, cycloalkyl, aryl, aralkyl or alkaryl. X is preferably chlorine. An example of a preferred vanadium compound having this formula is $VCl_4$.

A vanadium composition also useful in the practice of the present invention has the formula $VOX^1_c(OR^1)_{3-c}$ wherein $X^1$ is halogen, $R^1$ is hydrocarbyl having 1 to about 18 carbon atoms and c is 0 or an integer from 1 to 3. Preferably, $R^1$ has 2 to about 6 carbon atoms. As a hydrocarbyl, $R^1$ is preferably alkyl, and depending on the number of carbon atoms, cycloalkyl, aryl, aralkyl or alkaryl. $X^1$ is preferably chlorine. Examples of preferred vanadium compounds having this particular formula include $VOCl_3$, $VO(iOC_3H_7)_3$ and $VO(OC_4H_9)_3$.

Another vanadium composition useful in the present invention has the formula $VOX^2_2$ wherein $X^2$ is halogen; an example of a preferred vanadium compound in this regard is $VOCl_2$.

Mixtures of vanadium compositions may also be used in the practice of the instant invention.

A titanium compound useful as a titanium-containing composition in the practice of the present invention has the formula $TiX^6_g(OR^8)_{h-g}$ wherein $X^6$ is halogen, $R^8$ is hydrocarbyl having 1 to about 18 carbon atoms, h is the valence of titanium and is 3 or 4 and g is 0 or an integer from 1 to h. Preferably, $R^8$ has about 2 to about 6 carbon atoms. As a hydrocarbyl, $R^8$ is preferably alkyl, and depending on the number of carbon atoms, cycloalkyl, aryl, aralkyl or alkaryl. $X^6$ is preferably chlorine. An example of a titanium compound in this regard is $Ti(OC_4H_9)_4$.

Mixtures of titanium compounds may also be used.

In another variation of the present invention, the titanium-containing composition is a titanium-containing precursor composition. In the practice of this embodiment, a titanium compound as hereinbefore defined, is admixed with magnesium halide hydrate, preferably hexahydrate, and magnesium, preferably metallic magnesium; more preferably magnesium turnings. The magnesium halide hexahydrate is of the formula $MgX^7_2 \cdot 6H_2O$, wherein $X^7$ is halogen, preferably chlorine. Mixtures of titanium compounds as hereinbefore defined and mixtures of magnesium halide hexahydrates may also be used in the precursor composition of the present invention. Precursor compositions of this type are generally described in U.S. Patent Nos. 4,513,095, 4,536,487 and 4,610,974, the contents of which are incorporated herein by reference.

The amount of magnesium halide hexahydrate, magnesium and titanium compound used in the preparation of the precursor composition is most conveniently stated in terms of molar ratio. Thus for each mole of magnesium halide hexahydrate, up to about 10 moles of magnesium and up to about 15 moles of titanium compound are admixed. Preferably, for each mole of magnesium halide hexahydrate, up to about 8 moles of magnesium and up to about 10 moles of titanium compound are admixed. More preferably, for each mole of magnesium halide hexahydrate, up to about 6 moles of magnesium and up to about 8 moles of titanium compound are admixed.

To obtain the titanium-containing precursor composition, the admixing of magnesium halide hexahydrate, magnesium and titanium compound need not occur in any particular sequence, and may occur simultaneously. The medium used as a solvent for the admixture is preferably a mixture of high purity isoparaffinic materials, most preferably that which is commercially available under the tradename Isopar®G. The solvent may be added at any point in the admixing; however it is preferably that the solvent be added last.

In a preferred embodiment for obtaining the titanium-containing precursor composition, the magnesium halide hexahydrate, the magnesium, and the titanium compound are admixed, followed by the addition of a quantity of solvent sufficient to form a slurry. The admixture is then heated at elevated temperature, e.g., a temperature between about 70°C and 140°C, for at least about 3 hours. The resultant product, which may also include some precipitate, represents the titanium-containing precursor composition of the present invention. It may be used as prepared.

In a particularly preferred embodiment, the heating is performed incrementally, with each increment being at a higher temperature than that which immediately precedes it, and each increment generally lasting between 0.25 and 1 hour. In one aspect of this embodiment the precursor admixture is heated to about 85°C for a time period of about 0.5 hour, after which time heating is increased to about 90°C for about 0.5 hour, then to about 100°C for about 0.5 hour, then to about 110°C for about 0.5 hour and then to about 120°C for about 0.5 hour. Finally, the precursor admixture is heated to about 125°C for about 2 hours, after which time the precursor composition is obtained. In a variation of this particular embodiment, the admixture is first heated to about 95°C for about 0.5 minutes after which the admixture is allowed to stand at room temperature for a period of time, e.g., 24 to 48 hours or more; the aforedescribed incremental heating regimen is then performed.

In yet another variation of the present invention the titanium-containing composition can be formed by reaction with a compound of the formula $R^9\text{-}Mg\text{-}N(\text{-}R^{11})\text{-}Si(R^{10})_3$ or $R^9\text{-}Mg\text{-}N(\text{-}R^{11})\text{-}Si(R^{10})_2\text{-}N(\text{-}R^4)\text{-}Mg\text{-}R^9$ wherein $R^9$ is a straight or branched alkyl having from 1 to 18 carbon atoms or aryl having 6 to 14 carbon atoms, $R^{10}$ is hydrogen, straight or branched alkyl having 1 to 18 carbon atoms or aryl having 6 to 14 carbon atoms and $R^{11}$ is straight or branched alkyl having 1 to 18 carbon atoms, aryl having 6 to 14 carbon atoms, or $-Si(R^{10})_3$, and all $R^{10}$, $R^{11}$ and $R^{12}$ groups are the same or different.

An activator useful in the practice of the present invention has the formula $ZnX^3_2 \cdot 2AlR^2_3$ wherein $X^3$ is halogen and $R^2$ is hydrocarbyl having from 1 to about 12 carbon atoms; preferably 2 to 6 carbon atoms. As a hydrocarbyl, $R^2$ is preferably alkyl, and depending on the number of carbon atoms, cycloalkyl, aryl, aralkyl or alkaryl. $X^3$ is preferably chlorine. An example of an activator in this regard is $ZnCl_2 \cdot 2Al(C_2H_5)_3$.

An activator having this formula may be prepared by contacting a zinc halide with an aluminum hydrocarbyl. Preferably, in the practice of this embodiment, about one mole of zinc halide is contacted with about two moles of aluminum

hydrocarbyl. Contact in this regard may occur separately, i.e., before admixture with any of the other catalyst-forming components, or it may occur in situ upon the addition of sufficient quantities of zinc halide and aluminum hydrocarbyl to the catalyst admixture. Heating may be required, as necessary, to dissolve the zinc halide. The activator thus formed, in either case, is soluble in non-polar solvents such as heptane. A preferred zinc halide is zinc chloride; a preferred aluminum hydrocarbyl is aluminum alkyl, more preferably triethyl aluminum.

Another activator useful in the practice of the present invention has the formula

$$MR^3_dX^4_{3-d}$$

wherein M is aluminum (Al) or boron (B), $R^3$ is hydrocarbyl having 1 to about 12 carbon atoms, $X^4$ is halogen and d is 0 or an integer from 1 to 3. Preferably, $R^3$ has 2 to about 6 carbon atoms. As a hydrocarbyl, $R^3$ is preferably alkyl, and depending on the number of carbon atoms, cycloalkyl, aryl, aralkyl or alkaryl. $X^4$ is preferably chlorine. Examples of activators having this formula include diethyl aluminum chloride ($(C_2H_5)_2AlCl$), ethyl aluminum dichloride ($C_2H_5AlCl_2$), ethyl boron dichloride ($C_2H_5BCl_2$) and boron trichloride ($BCl_3$).

Still another activator useful in the practice of the present invention has the formula $Al_2R^4_3X^5_3$ wherein $R^4$ is a hydrocarbyl having 1 to about 12 carbon atoms and $X^5$ is halogen. Preferably $R^4$ has 2 to about 6 carbon atoms. As a hydrocarbyl, $R^4$ is preferably alkyl, and depending on the number of carbon atoms present, cycloalkyl, aryl, aralkyl or alkaryl. $X^5$ is preferably chlorine. An example of an activator having this formula is aluminum sesquichloride ($(C_2H_5)_3Al_2Cl_3$).

Yet still another activator useful in the practice of the present invention has the formula $MgR^5_eY_{2-e}$ wherein $R^5$ is hydrocarbyl having 1 to about 12 carbon atoms, Y is halogen, or has the formula $OR^6$ where $R^6$ is hydrocarbyl having 1 to about 12 carbon atoms, or Y is a silyl amide having the formula $N(SiR^6_3)_2$ where $R^6$ is hydrocarbyl having 1 to about 12 carbon atoms and e is 0, 1 or 2. A description of compounds conforming to this definition of Y is found in U.S. Patent No. 4,383,119 the contents of which are incorporated herein by reference. Preferably $R^5$, $R^6$ have 2 to about 6 carbon atoms, respectively. As hydrocarbyls, $R^5$, $R^6$ are preferably alkyl and depending on the number of respective carbon atoms, cycloalkyl, aryl, aralkyl or alkaryl. The preferred halogen is chlorine. Examples of activators having this formula include dibutyl magnesium ($(C_4H_9)_2Mg$), butyl ethyl magnesium ($C_4H_9MgC_2H_5$) and butyl magnesium silyl amide, e.g., $C_4H_9MgN(Si(CH_3)_3)_2$, also known as BMSA.

Mixtures of activators having the aforedescribed formulas may also be used in the practice of the invention.

Although not required in the practice of this invention, an alcohol may be introduced in any of the above-identified admixtures. Alcohols useful in this regard are alkanols, which may be used in the normal or branched configuration and have about 1 to about 8 carbon atoms. A preferred alcohol is $C_4H_9OH$.

In accordance with the first embodiment of the instant invention, the amount of vanadium composition and activator may vary depending on the type of polymerization reaction conducted. Typically, the amount of activator is about 1:30 to about 300:1 (mole:mole) based on the amount of vanadium present. Most preferably, the amount is between 1:2 to about 2:1. The activator may be introduced into the admixture at any point in the sequence of preparation. Thus, for example, the activator may be introduced before or after the vanadium composition. The activators are, in any event, preferably introduced into the admixture as a solution in a non-polar solvent. Alkanes, such as hexane or heptane, are preferred although cycloalkanes and aromatics may also be provided.

In regard to the second catalyst of the instant invention, the amount of zirconium composition, vanadium composition and activator used in the preparation of that catalyst is most conveniently stated as a molar ratio. Thus for about each mole of zirconium composition, up to about 10 moles of vanadium composition and up to about 25 moles of activator may be utilized.

In a preferred practice of this embodiment of the present invention up to about 8 moles of vanadium composition and up to about 17 moles of activator may be utilized for about each mole of zirconium composition. More preferably, for about each mole of zirconium composition, up to about 5 moles of vanadium composition and up to about 12 moles of activator are employed. Still more preferably, for about each mole of zirconium composition, up to about 3 moles of vanadium composition and up to about 8 moles of activator are employed. Yet still more preferably, for about each mole of zirconium composition, up to about 2 moles of vanadium composition and up to about 6 moles of activator are employed. Most preferably, for about each mole activator zirconium composition, up to about 1 mole of vanadium composition and up to about 4 moles of activator are employed.

In regard to the third catalyst of the instant invention, i.e. the catalyst comprising V, Ti and activator, the molar ratio of each component varies depending on the type of activator used. Preferably, the molar ratios observed in the formation of the aforementioned catalyst are a ratio of Al to (Ti plus V) of about 1:1 to about 50:1; a ratio of Zn to (Ti plus V) of about 0.1:1 to about 25:1; and a ratio of Mg to (Ti plus V) of about 0.1:1 to about 50:1.

In forming the fourth catalyst of the instant invention, the molar ratio of zirconium composition, for purposes of admixing, to vanadium composition to titanium composition to activator is generally about 1:5:4:10, respectively. In a first embodiment, the molar ratio of zirconium composition to vanadium composition to titanium-containing composition

to activator is preferably about 1:3:2:4, respectively. It is preferred in this first embodiment that the zirconium composition is $ZrCl_4$; that the vanadium composition is $VOCl_3$; that the titanium-containing composition is a precursor composition wherein the magnesium halide hexahydrate is magnesium chloride hexahydrate, i.e., $X^7$ is chlorine, and the titanium compound of the precursor composition is $Ti(OC_4H_9)_4$; and that the activator is $ZnCl_2 \cdot 2Al(C_2H_5)_3$.

In a second embodiment of the fourth catalyst, the molar ratio of zirconium composition to vanadium composition to titanium-containing composition to activator is preferably about 1:2:1:8, respectively. In practicing this second embodiment, it is preferable that the zirconium composition is $ZrCl_4$; that the vanadium composition is $VOCl_3$; that the titanium-containing composition is a precursor composition which employs magnesium chloride hexahydrate and, as the titanium compound, $Ti(OC_4H_9)_4$; and that the activator is $AlCl_2(C_2H_5)$. In another aspect of this embodiment it is preferred that the zirconium composition is $Zr(OC_4H_9)_4$; the vanadium composition is $VOCl_3$; the precursor composition employs magnesium chloride hexahydrate and $Ti(OC_4H_9)_4$; and the activator $ZnCl_2 \cdot 2Al(C_2H_5)_3$.

After admixing any of the compositions defined hereinabove and the activator, the catalyst product thus obtained can be recovered. If a solvent has been employed, it is preferable to remove the same; techniques known in the art, e.g., decantation, filtration or evaporation may be used in this regard. If evaporation is employed, it is preferred that a nitrogen purge at a temperature of about 100°C be utilized.

It should be appreciated that in the preferred practice of the present invention the catalyst is prepared under an inert atmosphere, such as a nitrogen atmosphere. Furthermore, it is desirable that catalyst preparation be conducted under conditions that are substantially free of oxygen. Thus in preferred practice, no more than 100 ppm of oxygen, based on the weight of the gaseous atmosphere, is present during catalyst preparation. More preferably, no more than 10 ppm of oxygen is present; most preferably, no more than 1 ppm of oxygen is present, based on the weight of the gaseous atmosphere.

It is also desirable that catalyst preparation be conducted under conditions that are substantially free of water. Thus in a preferred practice, no more than 5% by weight water, based on the weight of the admixture, is present during catalyst preparation. More preferably, no more than 0.5% by weight water, and most preferably no more than 0.05% by weight water is present, based on the weight of the admixture.

In practicing the present invention, the admixing generally occurs at or about room temperature, e.g., about 20°C to about 25°C, and at or about atmospheric pressure. Thus no special heating or cooling and no vacuum or pressurization are necessary. However, these may be employed without detriment and in certain embodiments of the present invention, one or the other is preferred.

More specifically, the preparation of certain embodiments of the present invention are facilitated by heating and/or cooling steps. For example, the zirconium compound $Zr(OC_4H_9)_4$ when obtained commercially (e.g. from Dynamite-Nobel Chemical) has a certain amount of butanol ($C_4H_9OH$) associated with it. Similarly, there is residual alcohol present if, as in one embodiment of the present invention, $ZrCl_4$ is reacted with an alcohol, e.g., butanol, to form a zirconium alkoxy and/or a zirconium chloroalkoxy. In these circumstances, it is preferred practice to heat the solution admixture in order to facilitate the interaction of components. Heating in this regard is preferably at a temperature of up to about 100°C, more preferably about 85°-90°C.

Moreover, in certain embodiments it is desirable to cool the admixture prior to the final addition of either the vanadium composition, zirconium composition or activator. Cooling in this regard may be employed when, for example, the final addition is found to be too exothermic for convenient manipulation. Cooling is preferably to temperature at or about 0°C.

While the catalyst product obtained after admixing the catalyst-forming components need not be washed, it is preferred practice to do so, preferably with the solvent in which admixing occurred, if a solvent was used. Preferably, washing is repeated more than once, e.g., three times.

The catalyst product thus obtained need not be dried prior to use, especially if slurry polymerization is contemplated, but may be dried without detriment. If drying is performed, it is preferably done at a temperature of about 100°C with a nitrogen purge for approximately thirty minutes.

The products obtained by the aforedescribed procedure represent the catalysts of the instant invention, which when combined with a co-catalyst form olefin polymerization catalyst systems. Co-catalysts useful in the practice of this aspect of the present invention include metal alkyls, metal alkyl hydrides, metal alkyl halides, or metal alkyl alkoxides, the metal being aluminum, boron, zinc, or magnesium and the alkyl having 1 to about 12 carbon atoms, preferably 2 to about 6 carbon atoms; mixtures of co-catalysts may also be employed. Preferred co-catalysts include aluminum trialkyls with triethylaluminum and/or tri-isobutylaluminum especially preferred.

Co-catalyst is generally utilized in an amount that conforms to a molar ratio of co-catalyst to vanadium composition of about 1:1 to about 1000:1; a more preferred ratio is about 5:1 to about 100:1, and more preferably about 20:1 to 50:1. The catalyst and the co-catalyst may be added continuously to the polymerization reactor during the course of the polymerization to maintain the desired ratio.

Modifiers, sometimes referred to as "promoters" in the art, are typically chosen for their ability to increase and maintain the reactivity of vanadium catalyst, and also affect melt index and melt index ratio (MIR), which is a measure of molecular weight distribution.

Useful modifiers include halogenating agents such as those of the formula

$$M^1H_iX^8_{j-i}$$

wherein $M^1$ is Si, C, Ge or Sn (preferably Si or C, and most preferably C), $X^8$ is halogen (preferably Cl or Br and most preferably Cl), i is 0, 1, 2 or 3, and j is the valence of $M^1$. Such modifiers are disclosed in Miro, et al. U.S. Patent No. 4,866,021 (September 12, 1989), the disclosure of which is incorporated herein by reference. Modifiers of this type include chloroform, carbon tetrachloride, methylene chloride, dichlorosilane, trichlorosilane, silicon tetrachloride, and halogenated hydrocarbons containing 1 to 6 carbon atoms such as those available from E. I. duPont de Nemours & Co. under the trade designation Freon (e.g., Freon 11 and Freon 113).

Bachl, et al. U.S. Patent No. 4,831,090 (May 16, 1989), the disclosure of which is incorporated herein by reference, discloses several classes of organohalogen compounds which are useful as modifiers. These include saturated aliphatic halohydrocarbons, olefinically unsaturated aliphatic halohydrocarbons, acetylenically unsaturated aliphatic halohydrocarbons, aromatic halohydrocarbons, and olefinically unsaturated halogenated carboxylates.

Particularly preferred modifiers are halocarbon compounds of the formula

$$R^{13}_kCX^9_{4-k}$$

wherein $R^{13}$ is hydrogen or an unsubstituted or halogen substituted saturated hydrocarbon having from 1 to 6 carbon atoms; $X^9$ is halogen and k is 0, 1 or 2. Examples of these halocarbon compounds include fluoro-, chloro-, or bromo-substituted ethane or methane compounds having at least two halogens attached to the carbon atom. Especially preferred modifiers include $CCl_4$, $CH_2Cl_2$, $CBr_4$, $CH_3CCl_3$, $CF_2ClCCl_3$, with the most especially preferred being $CHCl_3$ (chloroform), $CFCl_3$ (Freon 11) and $CFCl_2CCF_2Cl$ (Freon 113). Mixtures of any of these modifiers may be used.

Selection of modifiers can be used to adjust polymer properties, sometimes at the expense of activity.

Preferred polymer properties may be obtained with a chosen modifier at a ratio of modifier to transition metal which is a compromise to maximum catalyst activity. The product molecular weight distribution and response of melt index to the presence of hydrogen are tunable by choice and concentration of modifier. Activity, melt index ratio (MIR), high load melt index (HLMI), etc. all vary with the ratio of modifier to transition metal, and with the choice of modifier.

The operator may in accordance with known techniques feed controlled amounts of $H_2$ into the reaction at the beginning of the polymerization, during it, or both, to control or modify the molecular weight of the polymer product.

The modifier utilized, when it is utilized, is present in an amount that corresponds to a ratio of modifier to vanadium composition of about 0.1:1 to about 1000:1 (mole:mole), preferably about 1:1 to about 100:1, and more preferably about 5:1 to about 50:1.

The polymerization reaction may be conducted under solution, slurry or gas phase (including fluidized bed) conditions, at a temperature of about 50° to about 250°C; preferred temperature is about 50° to about 110°C; more preferred temperature is about 65° to about 105°C. Pressure is from about ambient to about 30,000 psi; preferred pressure is about ambient to about 1,000 psi; more preferred pressure is about ambient to about 700 psi.

The polymer obtained by the process of the present invention may be a homopolymer of ethylene, a homopolymer of an alpha-olefin, a copolymer of two or more alpha-olefins, or a copolymer of ethylene and one or more alpha-olefins, said alpha-olefins having 3 to about 12 carbon atoms. Alpha-olefins particularly useful in the present invention include propylene, 1-butene, 1-pentene, 1-hexene, 1-octene, 1,3-butadiene and 1,5-hexadiene.

The polymers thus produced can have a melt index (MI) at 190°C and 2.16kg (as measured by ASTM D1238-82) as high as up to about 1000, and as low as about 0.01 or less. The melt index ratio (HLMI/MI, also denominated as MIR) of the polymers capable of being produced will vary depending on the above parameters of HLMI and MI; for example, the HLMI/MI may be between about 30:1 to about 400:1, preferably between about 40:1 to about 400:1 and more preferably between about 50:1 to about 400:1. As appreciated by those of skill in the art, the melt index ratio correlates to molecular weight distribution (MWD).

The polymers produced by the catalysts of the present invention do not require polymer de-ashing to be commercially acceptable in low ash polymer applications.

The polymers of the present invention also exhibit a bimodal molecular weight distribution profile, as when examined by gel permeation chromatography with 1,2,4 trichlorobenzene as a solvent.

With either of the cocatalyst and modifier ratios, however, departure from the preferred values results in diminished activity and changes in polymer properties, i.e., MI and MIR. How these properties change differs with different catalyst components of the invention. Polymer properties may be tuned by varying cocatalyst and modifier levels, sometimes with a compromise of activity in order to achieve desired properties.

The catalysts of the present invention are also notable in that their utilization does not require the presence of a support material, such as silica or other customary catalyst supports.

The catalysts of the present invention are also advantageous in that they provide to the user the ability to tailor the properties of the polymer that is desired. The vanadium present affords sensitivity to the presence of hydrogen added to control of the molecular weight of the polymer. Higher polymer molecular weights are associated with higher strength, whereas lower molecular weights tend to be associated with greater processability. The catalyst of this invention allows one to achieve essentially any desired balance of strength and processability.

The catalyst systems of the present invention may be readily used under solution, slurry or gas phase (including fluidized bed) polymerization conditions.

The following examples are illustrative of the scope of the present invention and are not intended as a limitation thereon.

**EXAMPLE 1**

Preparation of Activator

Activator was prepared from zinc dichloride ($ZnCl_2$) and triethyl aluminum ($Al(C_2H_5)_3$). The preparation was carried out under an $N_2$ atmosphere. Heptane was used as a solvent.

Zinc dichloride (34.05 grams; the corresponding concentration was about 0.25 moles) was placed into a Fisher-Porter bottle in a dry glove box. A solution of triethyl aluminum (320.5 milliliters, the corresponding concentration was about 0.5 moles), in heptane, was subsequently added; the ratio of zinc to aluminum was 1:2. The solution was heated to 90°C for 2 hours, with stirring. After the heating, the solid $ZnCl_2$ dissolved to form the activator, which was soluble in the heptane. The activator, $ZnCl_2 \cdot 2Al(C_2H_5)_3$, was used without any further purification.

**EXAMPLE 2**

Catalyst Preparation

A catalyst composition of $VOCl_3$, $Zr(OC_4H_9)_4 \cdot nC_4H_9OH$, and $ZnCl_2 \cdot 2Al(C_2H_5)_3$ was prepared. The molar ratio of these catalyst components, in the order listed, was about 1:1:4.

Into a three-neck round bottom flask fitted with a paddle stirrer and purged with a $N_2$ was placed heptane (50 mls) and then $VOCl_3$ (10 mls of a 1M solution, the corresponding concentration was about 0.01 moles). $Zr(OC_4H_9)_4 \cdot nC_4H_9OH$ was obtained from Dynamite-Nobel Chemical; n was calculated to be 1.3. This viscous zirconium compound was added (4.35 ml, the corresponding concentration was about 0.01 mole) in dropwise fashion to the $VOCl_3$ solution. The solution turned an orange-yellow color and was opaque. The solution was heated to 85°C for 30 minutes, with stirring, after which time the solution had turned a light brown and had become clear, and no acid was detected in the $N_2$ gas purge effluent. The solution was then chilled to 0°C.

To the chilled solution was slowly added $ZnCl_2 \cdot 2Al(C_2H_5)_3$ (51.3 ml, the corresponding concentration was about 0.04 mole), prepared in accordance with Example 1. The light brown solution turned a dark brown; a light color precipitate formed. The slurry was then warmed to room temperature. The solid catalyst --the precipitate-- was washed three times with heptane (120 mls per wash) and recovered.

**EXAMPLE 3**

A catalyst composition of $ZrCl_4$, $ZnCl_2 \cdot 2Al(C_2H_5)_3$ and $VO(OC_4H_9)_3$ was prepared. The molar ratio of these catalyst components, in the order listed, was about 1:4:1.

Into a three-neck round bottom flask fitted with a paddle stirrer and purged with $N_2$ was placed $ZrCl_4$ (3.92 grams, the corresponding concentration was about 0.0168 mole) and heptane (30 mls). A peach color slurry formed. To the slurry was added $C_4H_9OH$ (3.11 ml, the corresponding concentration was about 0.0336 mole), slowly, in a dropwise fashion, at room temperature (20°-25°C). The peach color slurry turned white. The solution became clear 15 minutes later. Some peach color precipitate was observed and acid was detected in the $N_2$ purge gas effluent.

The three-neck flask was heated to 85°C and stirred for 30 minutes, after which time an oily brown liquid layer was observed at the bottom; the solid precipitate had disappeared. $ZnCl_2 \cdot 2Al(C_2H_5)_3$, prepared in accordance with Example 1, was slowly added (86.2 ml, the corresponding concentration was about 0.0672 mole). A brown slurry was formed. The slurry was stirred, at room temperature, for 30 minutes. $VO(OC_4H_9)_3$ was added (16.8 ml, the corresponding concentration was .0168 mole) slowly, in dropwise fashion. A dark brown precipitate was formed, and the liquid layer had a light brown color. The slurry was stirred, at room temperature, for 30 minutes. The solid precipitate was then washed three times with heptane (120 mls per wash) to recover the solid catalyst).

**EXAMPLE 4**

A catalyst composition of $ZrCl_4$, $ZnCl_2 \cdot 2Al(C_2H_5)_3$, $VO(OC_4H_9)_3$ was prepared. The molar ratio of these catalyst components, in the order listed, was about 1:8:3.

Into a three-neck round bottom flask fitted with a paddle stirrer and purged with a $N_2$ was placed $ZrCl_4$ (2.13 grams; the corresponding concentration was about 0.00914 mole) and heptane (50 mls). $C_4H_9OH$ was added (1.69 mls; the corresponding concentration was about 0.01828 mole). The resulting solution was heated to 90°C with stirring for 30 minutes, at the end of which time the top layer of the solution was observed to be clear; the bottom layer was observed as having a dark yellow color. The solution was then cooled to room temperature.

$ZnCl_2 \cdot 2Al(C_2H_5)_3$, prepared in accordance with Example 1, was slowly added to the solution (9.37 mls; the corresponding concentration was about 0.7312 mole). The solution was observed to turn milky and then dark brown. The solution was stirred at room temperature for 30 minutes, then chilled to 0°C. $VO(OC_4H_9)_3$ was added in dropwise fashion and a brown slurry was formed. The slurry was warmed to room temperature and stirred for 1 hour. The solid precipitate from the slurry was washed four times with heptane (125 mls per wash) to recover the solid catalyst.

**EXAMPLE 5**

A catalyst composition of $ZrCl_4$, $ZnCl_2 \cdot 2Al(C_2H_5)_3$, $VO(OC_4H_9)_3$ was prepared. The molar ratio of these catalyst components, in the order listed, was about 1:12:5.

Into a three-neck round bottom flask fitted with a paddle stirrer and purged with $N_2$, was placed $ZrCl_4$ (1.38 grams; the corresponding concentration was about 0.005918 mole) and heptane (50 mls). $C_4H_9OH$ was added (1.10 mls; the corresponding concentration was about 0.011836 mole) and the solution was heated with stirring at 90°C for 1 hour. At the end of this time, the top layer of the solution observed to be clear, and the bottom layer a dark yellow color. The solution was cooled to room temperature and $ZnCl_2 \cdot 2Al(C_2H_5)_3$, prepared in accordance with Example 1, was added (91.0 mls; the corresponding concentration was about 0.071 mole). The solution was observed to turn milky with the first 6 mls; it then turned yellow and clear brown, then dark brown upon completion of the addition of the zinc complex. A light brown precipitate had formed. The solution was stirred at room temperature, then chilled to 0°C with an ice bath. $VO(OC_4H_9)_3$ was added (29.6 mls; the corresponding concentration was about 0.02959 mole) in dropwise fashion over a period of 10 minutes. The solution was then stirred for 1 hour. The resultant catalyst was washed four times with heptane (125 mls per wash) and recovered.

**EXAMPLE 6**

A catalyst composition of $Zr(OC_4H_9)_4 \cdot nC_4H_9OH$, $VOCl_3$, $ZnCl_2 \cdot 2Al(C_2H_5)_3$ was prepared. The molar ratio of these catalyst components, in the order listed, was about 1:2:6. In this preparation, $Zr(OC_4H_9)_4$ was prereacted with $VOCl_3$ overnight before the activation treatment.

Into a Fisher-Porter bottle at room temperature was placed 3.48 mls of $Zr(OC_4H_9)_4 \cdot nC_4H_9OH$ (commercially obtained from Dynamite-Nobel Chemical; n was calculated to be about 1.3, the corresponding concentration was about 0.008 mole) and $VOCl_3$ (16 mls, the corresponding concentration was about 0.016 mole). The solution was stirred for 30 minutes, after which time a clear yellow solution with no precipitate was observed. The solution was allowed to stand overnight (approximately 15 hours) at room temperature, after which time the solution was observed to be clear and, brown in color; no precipitate was seen.

To this solution, $ZnCl_2 \cdot 2Al(C_2H_5)_3$, prepared in accordance with Example 1, was slowly added (61.5 mls, the corresponding concentration was about 0.048 mole). The addition was at room temperature and upon completion, a greenish brown precipitate in a brown solution was observed. The precipitate was washed three times with heptane (150 mls per wash) and the solid, greenish-brown catalyst was recovered.

**EXAMPLE 7**

A catalyst composition of $Zr(OC_4H_9)_4 \cdot nC_4H_5OH$, $ZnCl_2 \cdot 2Al(C_2H_5)_3$, and $VOCl_3$ was prepared. The molar ratio of these catalyst components, in the order listed, was about 1:6:2. In this catalyst preparation, the zirconium composition was not pre-reacted with the vanadium composition.

Into a Fisher-Porter bottle was placed 3.5 mls of $Zr(OC_4H_9)_4 \cdot nC_4H_5OH$ (commercially obtained from Dynamite-Nobel Chemical; n was calculated to be about 1.3 mole, and heptane (50 mls). To this solution was added, at room temperature (20°C - 25°C) $ZnCl_2 \cdot 2Al(C_2H_5)_3$, (61.5 mls, the corresponding concentration was about 0.048 mole), prepared in accordance with Example 1. The addition, with stirring, was fast and resulted in a clouded solution that was observed to be yellow, then brown, and finally formed a brown solution with brown precipitate.

After 30 minutes at room temperature had passed, $VOCl_3$ (16 mls, the corresponding concentration was about 0.016 mole) was slowly added with fast stirring. Smoke was generated in the first 10 minutes. After 1 hour at room temperature

a yellow-brown slurry was observed. After a first heptane wash (150 mls), the filtrate was observed to react with air to form a white precipitate. After a second heptane wash (150 mls) the filtrate was observed to still be reactive with air. After a third and fourth heptane wash (150 mls per wash), a yellowish-brown solid catalyst was recovered.

## EXAMPLE 8

A catalyst composition of $ZrCl_4$, $ZnCl_2 \cdot 2Al(C_2H_5)_3$ and $VOCl_3$ was prepared. The molar ratio of these catalyst components, in the order listed was about 1:6:2.

Into a Fisher-Porter bottle was placed $ZrCl_4$ (1.75 grams, the corresponding concentration was about 0.0075 mole) and heptane (50 mls). While at room temperature, $C_4H_9OH$ was slowly added (1.29 mls, the corresponding concentration was about 0.015 mole). No observable reaction occurred at room temperature. The solution was heated at 90°C for 1 hour, after which time the $ZrCl_4$ was observed to have disappeared, the resultant solution was a clear and yellow color, and had two layers.

The solution was cooled to room temperature with slow stirring and $ZnCl_2 \cdot 2Al(C_2H_5)_3$ prepared in accordance with Example 1, was slowly added (57.7 mls, the corresponding concentration was about 0.045 mole) while the solution was slowly stirred. The solution color was observed to turn brown in approximately 3 minutes and a brown precipitate was observed. After 30 minutes at room temperature, $VOCl_3$ (15 mls, the corresponding concentration was about 0.015 mole) was slowly added. White smoke was generated and the solution was stirred at room temperature for 1 hour. A brown slurry was observed. The solid was washed three times with heptane (150 mls per wash) and a brown color solid catalyst was recovered.

## EXAMPLE 9

A catalyst composition of $Zr(OC_3H_7)_4$, $ZnCl_2 \cdot 2Al(C_2H_5)_3$, and $VOCl_3$ was prepared. The molar ratio of the catalyst components, in the order listed, was about 1:6:2.

$Zr(OC_3H_7)_4 \cdot nC_3H_7OH$ was commercially obtained from Alfa Chemical, n was calculated to be about 1.58. Into a Fisher-Porter bottle was placed the $Zr(OC_3H_7)_4 \cdot nC_3H_7OH$ (3.22 mls, the corresponding concentration was about 0.008 mole) and heptane (50 mls). Fast addition of $ZnCl_2 \cdot 2Al(C_2H_5)_3$, prepared in accordance with Example 1, followed (61.5 mls, the corresponding concentration was about 0.048 mole). The fast addition occurred at room temperature and was followed by slow stirring for 15 minutes. A brown solution with a brown precipitate was observed.

$VOCl_3$ was slowly added (16 mls, the corresponding concentration was about 0.016 mole) to this solution, at room temperature, and a solution with a brown precipitate was observed. After three washings with heptane (150 mls per wash), a solid brown catalyst was recovered.

## EXAMPLE 10

A catalyst composition of $ZrCl_4$, $C_4H_5OH$, $ZnCl_2 \cdot 2Al(C_2H_5)_3$ and $VOCl_3$ was prepared. The molar ratio of the catalyst components in the order listed was about 1:2:8:3.

Into a 500 ml, 3-neck round bottom flask was added 1.47 g of $ZrCl_4$ and 50 mls heptane. With stirring, 1.17 mls of $C_4H_5OH$ was added (the $C_4H_5OH$:Zr mole ratio was 2). The mixture was stirred at 90°C until a clear light yellow solution formed. The solution was cooled to room temperature.

Next, 64.6 mls of $ZnCl_2 \cdot 2Al(C_2H_5)_3$, prepared in accordance with Example 1, was added dropwise at room temperature. The mixture was then stirred at room temperature for 30 minutes, during which time a precipitate formed. To this mixture, 18.9 mls of a 1.0 mM/ml solution of $VOCl_3$ in heptane was added. This mixture was stirred for about 30 minutes, then filtered, then washed three times with heptane (150 mls per wash). The final catalyst solid was brown.

## EXAMPLE 11

### Polymerization

Homopolymers of ethylene were prepared using the catalyst of the present invention. Polymerization was conducted in an autoclave of approximately 1.3 liters in size, and fitted with a stirrer. In each of the polymerizations the reactor was purged with $N_2$ at a temperature greater than about 100°C for about two hours. A solution of co-catalyst in heptane (about 0.5 mls of triethyl aluminum as a 25 weight percent solution thereof in heptane) was added to the reactor at the desired reaction temperature (about 80° - 100°C). The reactor was then closed and $H_2$ was added to the reactor from a pressure vessel. Isobutane was added (about 500 mls) and the stirrer in the reactor was turned on. Ethylene was then added to the reactor up to the desired operating pressure (about 550 psi). Modifier was then injected at the polymerization temperature, followed by the catalyst of the instant invention about one minute later. Polymerization was run for about one hour. The reaction was terminated by shutting off the ethylene supply and venting the reactor.

Table 1, below, identifies reaction conditions (temperature, ethylene, hydrogen, modifier), catalyst reactivity (in grams of polyethylene produced per gram of catalyst per hour, gPE/gCAT-hr) and MI, HLMI and MIR of the polymer produced for each run using the catalyst prepared according to Examples 3, 4, 5, 6, 7, 9 and 10.

TABLE 1

POLYMERIZATION DATA

| Run | T (°C) | C2H4 Mole % | H2 (psi) | Modifier Type | Modifier Micromoles | Reactivity g PE/gCat-hr | MI | HLMI | MIR |
|---|---|---|---|---|---|---|---|---|---|
| CATALYST OF EXAMPLE 3 | | | | | | | | | |
| 1 | 80.0 | 10.0 | 300 | CHCl3 | 500 | 6240 | 0.02 | 1.7 | 84 |
| 2 | 80.0 | 10.0 | 300 | CHCl3 | 2000 | 5330 | 0.02 | 2.4 | 105 |
| 3 | 80.0 | 10.0 | 400 | CFCl3 | 500 | 6705 | 0.05 | 4.5 | 85 |
| CATALYST OF EXAMPLE 4 | | | | | | | | | |
| 4 | 80.0 | 10.0 | 200 | CHCl3 | 200 | 4806 | 0.11 | 38.8 | 363 |
| 5 | 80.0 | 10.0 | 200 | CHCl3 | 500 | 5712 | 0.64 | 168.3 | 265 |
| 6 | 80.0 | 10.0 | 200 | CHCl3 | 1000 | 4604 | 0.26 | 78.9 | 307 |
| 7 | 93.3 | 8.5 | 200 | CHCl3 | 500 | 8058 | 0.11 | 38.4 | 356 |
| 8 | 80.0 | 10.0 | 200 | CFCl3 | 500 | 4647 | 0.57 | 167.8 | 296 |
| 9 | 80.0 | 10.0 | 200 | Cl2FCCClF2 | 500 | 3856 | - | 0.2 | - |
| CATALYST OF EXAMPLE 5 | | | | | | | | | |
| 10 | 80.0 | 10.0 | 200 | CHCl3 | 500 | 8040 | 1.66 | 239.9 | 145 |
| 11 | 93.3 | 5.0 | 75 | CHCl3 | 500 | 5940 | 1.28 | 168.4 | 132 |
| 12 | 93.3 | 6.0 | 75 | CHCl3 | 1000 | 10400 | 0.82 | 102.5 | 125 |
| 13 | 93.3 | 6.0 | 75 | CFCl3 | 500 | 8930 | 0.56 | 72.6 | 130 |
| 14 | 93.3 | 6.0 | 75 | CFCl3 | 100 | 14450 | 0.44 | 57.9 | 132 |
| 15 | 80.0 | 10.0 | 150 | CFCl3 | 100 | 11970 | 4.40 | - | - |
| 16 | 93.3 | 6.0 | 75 | Cl2FCClF2 | 500 | 3300 | - | 3.3 | - |
| 17 | 93.3 | 6.0 | 75 | (CH3)3SiCl | 500 | 1250 | - | 0.1 | - |
| CATALYST OF EXAMPLE 6 | | | | | | | | | |
| 18 | 93.3 | 7.0 | 100 | CFCl3 | 100 | 12186 | 0.07 | 16.2 | 225 |
| 19 | 93.3 | 7.0 | 100 | CFCl3 | 200 | 10940 | 0.04 | 9.6 | 229 |
| 20 | 93.3 | 7.0 | 100 | CFCl3 | 400 | 10245 | 0.04 | 9.8 | 251 |
| 21 | 93.3 | 7.0 | 150 | CHCl3 | 200 | 10380 | 0.18 | 46.6 | 266 |
| 22 | 93.3 | 7.0 | 100 | CHCl3 | 200 | 11880 | 0.04 | 9.6 | 234 |
| 23 | 93.3 | 7.0 | 100 | CHCl3 | 400 | 1333 | 0.07 | 11.5 | 155 |
| 24 | 93.3 | 7.0 | 100 | CHCl3 | 200 | 7287 | 0.03 | 10.0 | 303 |
| 25 | 93.3 | 7.0 | 100 | CHCl3 | 200 | 9100 | 0.11 | 21.9 | 205 |
| 26 | 93.3 | 7.0 | 100 | CH2BrCl | 100 | 53330 | 0.05 | 9.7 | 206 |
| 27 | 93.3 | 7.0 | 100 | CBr2F2 | 100 | 6713 | 0.08 | 22.3 | 297 |
| CATALYST OF EXAMPLE 7 | | | | | | | | | |
| 28 | 93.3 | 7.0 | 100 | CFCl3 | 100 | 15200 | - | 1.3 | - |
| 29 | 93.3 | 7.0 | 125 | CFCl3 | 400 | 21840 | - | 4.5 | - |
| 30 | 93.3 | 7.0 | 150 | CFCl3 | 100 | 13642 | - | 2.5 | - |
| 31 | 93.3 | 7.0 | 150 | CFCl3 | 400 | 13033 | 0.01 | 4.1 | 293 |
| 32 | 93.3 | 7.0 | 150 | CFCl3 | 400 | 14050 | - | 3.1 | - |
| 33 | 93.3 | 7.0 | 200 | CFCl3 | 400 | 17010 | 0.03 | 8.6 | 345 |
| 34 | 93.3 | 7.0 | 175 | CFCl3 | 800 | 12667 | 0.03 | 6.3 | 216 |
| 35 | 93.3 | 7.0 | 200 | CHCl3 | 400 | 17125 | 0.02 | 6.5 | 260 |
| 36 | 93.3 | 7.0 | 200 | CHCl3 | 100 | 12558 | 0.01 | 3.0 | 374 |
| 37 | 93.3 | 7.0 | 175 | CHCl3 | 800 | 16500 | 0.03 | 7.8 | 312 |
| CATALYST OF EXAMPLE 9 | | | | | | | | | |
| 38 | 93.3 | 7.0 | 100 | CHCl3 | 100 | 8461 | 0.02 | 3.5 | 233 |
| 39 | 93.3 | 7.0 | 100 | CHCl3 | 400 | 5400 | 0.09 | 20.7 | 229 |
| 40 | 93.3 | 7.0 | 100 | CFCl3 | 100 | 8873 | 0.04 | 5.9 | 169 |
| 41 | 93.3 | 7.0 | 100 | CFCl3 | 400 | 6613 | 0.21 | 34.5 | 167 |
| 42 | 93.3 | 7.0 | 100 | CFCl3 | 400 | 7027 | 0.33 | 49.1 | 149 |
| 43 | 99.0 | 7.0 | 70 | CFCl3 | 400 | 5333 | 0.15 | 23.8 | 162 |
| 44 | 99.0 | 7.0 | 70 | CFCl3 | 400 | 10927 | 0.02 | 3.8 | 222 |
| CATALYST OF EXAMPLE 10 | | | | | | | | | |
| 45 | 93.3 | 7.0 | 100 | CFCl3 | 100 | 15870 | - | 2.0 | - |
| 46 | 93.3 | 7.0 | 200 | CFCl3 | 100 | 8430 | 0.02 | 3.6 | 223 |
| 47 | 93.3 | 7.0 | 200 | CFCl3 | 400 | 14560 | 0.05 | 16.3 | 347 |
| 48 | 93.3 | 7.0 | 200 | CFCl3 | 400 | 9790 | 0.12 | 48 | 400 |
| 49 | 93.3 | 7.0 | 200 | CHCl3 | 400 | 12610 | 0.04 | 9.8 | 223 |
| 50 | 93.3 | 7.0 | 200 | CHCl3 | 800 | 13410 | 0.44 | 11.1 | 252 |

As seen from Table 1 above, the catalyst of Example 3 exhibited high reactivity with both $CHCl_3$ and $CFCl_3$ modifiers. Similarly, the catalyst of Example 4, which had a vanadium to zirconium ratio of 3, exhibited high reactivity with $CHCl_3$, $CFCl_3$ and $Cl_2FCCClF_2$ as modifiers. Run number 7 in this regard showed particularly high catalyst reactivity at the higher reaction temperature (about 93.3°C).

The catalyst of Example 5, having a vanadium to zirconium ratio of 5, exhibited high reactivity with $CHCl_3$, $CFCl_3$, $Cl_2FCCClF_2$ and $(CH_3)_3SiCl$ as modifiers. Table 1 further shows that this catalyst was very reactive even at reduced levels of ethylene, i.e., at 5 and 6 mole %, as shown by Run numbers 11, 12, 13, 14, 16 and 17. A comparison of Run number 10 using the catalyst of Example 5 with Run number 5 using the catalyst of Example 4, wherein all other relevant conditions were substantially the same, shows that the former had higher MI, greater reactivity and a narrower MWD as measured by MIR. Run numbers 10-17 further indicate that, at least for the catalyst of Example 5, the use of $CHCl_3$ and $CFCl_3$ as modifiers gave higher MI potential than the use of $Cl_2FCCClF_2$ and $(CH_3)_3SiCl$.

Run numbers 18-27 in Table 1 utilized catalyst prepared in accordance with Example 6 wherein the zirconium and vanadium compounds were pre-complexed prior to reaction with the activator compound; the vanadium to zirconium ratio was 2. Table 1 shows that this catalyst was very reactive when used in conjunction with $CHCl_3$, $CFCl_3$, $CH_2BrCl$ and $CBr_2F_2$ as modifiers. The catalyst also produced a broad MWD as measured by MIR. Run numbers 24 and 25 employed trihexyl aluminum and triethyl aluminum, respectively, as cocatalysts; all other runs using the catalyst of Example 6 employed tri-isobutylaluminum as cocatalyst. Generally, the use of triethylaluminum gave higher MI.

Run numbers 28-37 show polymerization data using catalyst prepared pursuant to Example 7. This catalyst had the same vanadium to zirconium ratio as the catalyst from Example 6; however, the zirconium and vanadium compounds were not pre-complexed. The catalyst of Example 7 showed high reactivity with $CHCl_3$ and $CFCl_3$ as modifiers. A comparison of Run numbers 18-27 using catalyst of Example 6 to Run numbers 28-37 using catalyst of Example 7 shows that the former required less hydrogen to yield similar MI. The polymer obtained using the catalyst of Example 7 manifested broad MWD as evidenced by the high MIR. In addition, the molecular weight of the polymer was high, as gauged by the HLMI being low, e.g., lower than about 60.

Run numbers 38-44 of Table 1 illustrate polymerization using catalyst prepared in accordance with Example 9 wherein the vanadium compound was $VOCl_3$, the zirconium compound was $Zr(OC_3H_7)_4 \cdot nC_3H_7OH$ and the vanadium to zirconium ratio was 2. The catalyst exhibited high reactivity with both $CHCl_3$ and $CFCl_3$ as modifiers. A comparison of Run numbers 38 and 40 with Run numbers 39 and 41, respectively, shows that when the concentration of modifier was increased, the MI potential increased.

Run numbers 45-50 of Table 1 illustrate polymerization using catalyst prepared in accordance with Example 10. The catalyst showed very high activity and the polymer thus obtained manifested broad MWD as evidenced by the high MIR. In addition, the molecular weight of the polymer was high, as gauged by the HLMI being low, e.g., lower than about 60.

Figure 1 shows the molecular weight distribution curve for the polymer obtained from Run 15, using catalyst prepared in accordance with Example 5. As seen by reference to Figure 1, the polymer obtained by using the catalyst of the present invention manifests a bimodal profile. The curve of the Figure was specifically obtained on the basis of gel permeation chromatography (GPC).

The polymers of this invention have many and varied uses, including formation into films, injection-molded articles and blow-molded articles using well-known forming methods. The polymers are contemplated to be especially useful for forming high-strength films (i.e., films having high impact strength and/or high tear resistance) and injection-molded and blow-molded articles having high ESCR (i.e, environmental stress-crack resistance).

The term HLMI, as used herein means the high load melt index as measured at 190°C and 21.6 kg in accordance with ASTM D1238-82.

## EXAMPLE 12

Preparation of Titanium-Containing Precursor Composition

Into a Fisher-Poter bottle, in a dry glove box, was added magnesium chloride hexahydrate ($MgCl_2 \cdot 6H_2O$) (10.40 grams; the corresponding concentration was 0.0512 moles), magnesium metal (Mg) in the form of magnesium turnings (7.29 grams; the corresponding concentration was 0.3 moles) and titanium tetrabutoxide ($Ti(OC_4H_9)_4$) (136.8 milliliters; the corresponding concentration was 0.4 moles). The molar ratio of $MgCl_2 \cdot 6H_2O$ to Mg to $Ti(OC_4H_9)_4$ was 0.128 to 0.75 to 1.0, respectively. A stir bar was also added.

Isopar®G was purged with nitrogen gas for about 20 minutes before being transferred (250 milliliters) into the Fisher-Poter bottle, outside the box to form a slurry. The total volume in the bottle was approximately 400 milliliters.

The Fisher-Poter bottle was heated, with stirring, at 95°C for 30 minutes. The white colored $MgCl_2 \cdot 6H_2O$ was dissolved, with most of magnesium metal remaining at the bottom of the flask. The color of the solution was clear yellow. The flask was kept at room temperature over a period of about 62 hours, after which time the solution had turned dark; some residual magnesium metal remained.

The solution was heated incrementally, starting at 85°C for 30 minutes, then at 90°C for 30 minutes, then at 95°C for 30 minutes, then at 100°C for 30 minutes, then at 105°C for 30 minutes, and finally at 125°C for 2 hours. Afterward, the solution was observed to have a dark color; no precipitate was observed at this time. The solution was cooled to room temperature. The final solution, representing the precursor composition, was observed to have a dark color with some green precipitate. The titanium-containing precursor composition was used as prepared.

**EXAMPLE 13**

Preparation of Activator

Activator was prepared from zinc dichloride ($ZnCl_2$) and triethylaluminum ($Al(C_2H_5)_3$). The preparation was carried out under an $N_2$ atmosphere. Heptane was used as a solvent.

Zinc dichloride (34.05 grams; the corresponding concentration was 0.25 moles) was placed into a Fisher-Poter bottle in a dry glove box. A solution of triethyl aluminum (320.5 milliliters; the corresponding concentration was 0.5 moles), in heptane, was subsequently added; the mole ratio of zinc to aluminum was 1:2. The solution was heated to 90°C for 2 hours, with stirring. After the heating, the solid $ZnCl_2$ had dissolved. The mixture was then allowed to settle and was used in subsequent catalyst preparation without any further purification.

**EXAMPLE 14**

Catalyst Preparation

Into a round bottom flask was placed zirconium tetrachloride ($ZrCl_4$) (1.75 grams; the corresponding concentration was 7.5 millimoles), titanium-containing precursor composition, as prepared in accordance with Example 12 (7.5 milliliters; the corresponding concentration was 7.5 millimoles), and heptane (50 milliliters). The mixture was heated at 95°C for 1 hour, with stirring, at the end of which time the solution was observed to be slightly dark in color, opaque, with a brownish-green precipitate. Some unreacted $ZrCl_4$ was also observed as light particles, few in number.

Vanadyl trichloride ($VOCl_3$) was added (15 milliliters; the corresponding concentration was 15 millimoles), slowly, over a period of 5 minutes, while the solution was maintained at 95°C. After complete addition of the $VOCl_3$, heating was continued at 95°C for 30 minutes, with stirring. A grayish precipitate was observed. Normal butyl alcohol ($nC_4H_9OH$) was then added (1.39 milliliters; the corresponding concentration was 15 millimoles), slowly, while the solution temperature was maintained, with stirring at 95°C for 30 minutes. A dark gray precipitate was observed.

The solution was cooled to room temperature over a period of 30 minutes, at the end of which time ethyl aluminum dichloride ($AlCl_2(C_2H_5)$) was slowly added (17.9 milliliters; the corresponding concentration was 60 millimoles) over a period of 5 minutes. While remaining at room temperature, the solution was stirred for 1 hour. A purple precipitate was observed. The resultant precipitate was washed four times with heptane (150 milliliters per wash) and a purple catalyst was recovered.

**EXAMPLE 15**

Catalyst Preparation

Into a round bottom flask was placed titanium-containing precursor composition, prepared in accordance with Example 12 (7.8 milliliters; the corresponding concentration was 7.8 millimoles), zirconium tetrachloride ($ZrCl_4$) (0.91 grams; the corresponding concentration was 3.9 millimoles), and heptane (50 milliliters). The mixture was heated to 95°C for 1 hour, after which time some unreacted $ZrCl_4$ was observed, along with a brownish-green precipitate.

To the solution was added vanadyl trichloride ($VOCl_3$) (11.7 milliliters; the corresponding concentration was 11.7 millimoles), slowly over a period of 5 minutes while the solution was maintained at 95°C. After complete addition of the $VOCl_3$ heating was continued, with stirring, at 95°C for 30 minutes. A gray precipitate was observed.

The solution was cooled to room temperature over a period of 30 minutes. Activator, prepared in accordance with Example 13, was added (20 milliliters; the corresponding concentration was 15.6 millimoles) slowly over a 3 minute period. Afterward, the solution was stirred for 1 hour. A solid having a light, creamy chocolate color was observed. The solid was washed three times with heptane (150 milliliters per wash) and a light creamy chocolate catalyst was recovered.

**EXAMPLE 16**

Catalyst Preparation

Into a round bottom flask was placed titanium-containing precursor composition prepared in accordance with Example 12 (5 milliliters; the corresponding concentration was 5 millimoles). While at room temperature, activator prepared in accordance with Example 13 (51.3 milliliters; the corresponding concentration was 40 millimoles), was added slowly over a 10 minute period. A dark slurry was observed.

Into a separate vessel was placed 3.5 mls of 2.3 mM/ml solution of zirconium tetrabutoxide ($Zr(OC_4H_9)_4$) and butyl alcohol ($n-C_4H_9OH$) (the solution concentration was 8 mM) and 16 mls of a 1 mM/ml solution of vanadyl trichloride ($VOCl_3$) the concentration was 16mm. The solutions were in heptane solvent. The reaction was stirred overnight at ambient temperature and used without further purification. The final solution had a vanadium concentration of 0.8 mM/ml and a zirconium concentration of 0.4 mM/ml.

To the round bottom flask containing the titanium precursor composition and the activator, the thus prepared zirconium-vanadium solution was slowly added (10 milliliters). The addition, at room temperature, was observed to generate heat of reaction. A dark brown slurry was observed. The solution, still at room temperature, was stirred for 1 hour, after which time a dark brown slurry was observed. The slurry was washed three times with heptane (150 milliliters per wash) and a solid brown catalyst was recovered.

**EXAMPLE 17**

Polymerization

Homopolymers of ethylene were prepared using the catalyst of the present invention. Polymerization was conducted in an autoclave approximately 1.3 liters in size, and fitted with a stirrer. In each of the polymerizations, the reactor was purged with $N_2$ at a temperature greater than about 100°C for about two hours. A solution of co-catalyst in heptane (about 0.5 mls of triethyl aluminum as a 25 weight percent solution thereof in heptane) was added to the reactor at the desired reaction temperature (about 80° - about 100°C). The reactor was then closed and $H_2$ was added to the reactor from a pressure vessel. Isobutane was added (about 500 mls) and the stirrer in the reactor was turned on. Ethylene was then added to the reactor up to the desired operating pressure (about 550 psi).

Modifier was then injected at the polymerization temperature, followed by the catalyst of the present invention about one minute later. Polymerization was run for about one hour. The reaction was terminated by shutting off the ethylene supply and venting the reactor.

Table 2, below, shows the results for the polymerization of ethylene using, variously, the catalyst prepared according to Example 14 and Example 16 with different temperatures; with various modifiers, in varying amounts; without modifier; and with different hydrogen levels. Table 2 also presents the reactivity of the catalyst (in grams of polyethylene produced per gram of catalyst per hour) and relates the melt index (MI), high load melt index (HLMI) and the melt index ratio (MIR) for polymer thus produced. As seen from Table 2, the MIR ranges from 38 to 119 indicating that the polymers produced by the catalyst of the present invention have a broad molecular weight distribution. Table 2 also shows the high reactivity,

well over 21,000, of the catalyst of the present invention.

TABLE 2

| Catalyst of Example 16 | | | | | | | | |
|---|---|---|---|---|---|---|---|---|
| Run | T (°C) | H2 (psi) | Modifier | Modifier (μ mol) | Reactivity (g PE/gCat-hr) | MI | HLMI | MIR |
| 1 | 93.3 | 100 | NONE | 0 | 21440 | 0.08 | 3.40 | 44 |
| 2 | 93.3 | 100 | NONE | 0 | 14590 | 0.13 | 5.25 | 42 |
| 3 | 93.3 | 100 | CFCl3 | 100 | 14270 | 0.03 | 2.60 | 79 |
| 4 | 93.3 | 100 | CFCl3 | 200 | 16260 | - | 1.32 | - |
| 5 | 93.3 | 100 | CFCl3 | 400 | 15090 | 0.03 | 3.33 | 119 |
| 6 | 93.3 | 100 | CHCl3 | 100 | 8160 | 0.03 | 3.39 | 113 |
| 7 | 93.3 | 100 | CHCl3 | 200 | 9460 | 0.05 | 4.14 | 92 |
| 8 | 93.3 | 100 | CHCl3 | 400 | 7960 | 0.07 | 7.31 | 109 |
| 9 | 99.0 | 70 | CFCl3 | 200 | 16220 | 0.04 | 2.59 | 70 |
| 10 | 99.0 | 120 | CFCl3 | 300 | 14514 | 0.08 | 4.58 | 59 |
| 11 | 99.0 | 120 | CFCl3 | 200 | 17533 | 0.07 | 4.56 | 70 |
| 12 | 99.0 | 170 | CFCl3 | 200 | 12773 | 0.18 | 11.00 | 61 |
| Catalyst of Example 14 | | | | | | | | |
| Run | T (°C) | H2 (psi) | Modifier | Modifier (μ mol) | Reactivity (g PE/gCat-hr) | MI | HLMI | MIR |
| 13 | 93.3 | 200 | NONE | 0 | 14846 | 0.57 | 21.60 | 38 |
| 14 | 93.3 | 150 | CHCl3 | 50 | 7833 | 0.17 | 7.97 | 47 |
| 15 | 93.3 | 150 | CHCl3 | 100 | 7400 | 0.26 | 22.80 | 88 |
| 16 | 93.3 | 150 | CHCl3 | 300 | 5300 | 0.35 | 35.35 | 101 |

Figure 2 shows the molecular weight distribution curves for the polymers obtained from Runs 5 (Curve 1) and 8 (Curve 2). As seen, the polymers obtained had a broad molecular weight distribution and manifested a trimodal profile. The curves of Figure 2 were specifically obtained on the basis of gel permeation chromatography (GPC).

The term HLMI as used herein means High Load Melt Index measured at 190°C and 21.6 kg in accordance with ASTM D1238-82.

**EXAMPLE 18**

Preparation of the Titanium Precursor Composition

Into a Fisher-Porter bottle, in a dry box, was added $MgCl_2$ $6H_2O$ (10.408 grams; the corresponding concentration was 0.0512 moles), magnesium metal in the form of magnesium turnings (7.290 grams; the corresponding concentration was 0.3 moles) and $Ti(OC_4H_9)_4$ (136.8 milliliters; the corresponding concentration was 0.4 moles). The mole ratio of $MgCl_2$ $6H_2O$ to Mg to $Ti(OC_4H_9)_4$ was 0.128 to 0.75 to 1.0, respectively. A stir bar was also added.

Isopar$^R$G was purged with nitrogen gas for about 20 minutes before being transferred (250 milliliters) into the Fisher-Porter bottle outside the box. The total volume in the bottle was approximately 400 milliliters.

The Fisher-Porter bottle was then heated up to 95°C for 30 minutes under stirring. The white colored $MgCl_2 \cdot 6H_2O$ was dissolved, with most of magnesium metal remaining at the bottom of the flask. The color of the solution was clear yellow. The flask was kept at room temperature over a period of about 62 hours, after which the solution had turned dark. Some residual magnesium metal still remained.

The solution was then heated at 85°C for 30 minutes, then at 90°C for 30 minutes, then at 95°C for 30 minutes, then at 100°C for 30 minutes, then at 105°C for 30 minutes, and finally at 125°C for 2 hours. Afterward, the solution had a dark color; no precipitate was observed at this time. The solution was then cooled to room temperature. The final solution was observed to have a dark color with some green precipitate.

EXAMPLE 19

Preparation Of Zinc-Aluminum Complex

The zinc-aluminum complex $ZnCl_2 \cdot 2Al(CH_2CH_3)_3$ was prepared from zinc dichloride ($ZnCl_2$) and triethylaluminum ($Al(C_2H_5)_3$). Heptane was used as a solvent.

Zinc dichloride (34.05 grams; the corresponding concentration was 0.25 moles) was placed into a Fisher-Porter bottle in a dry box. Triethyl aluminum (320.5 milliliters; the corresponding concentration was 0.5 moles) was subsequently added; the mole ratio of zinc to aluminum was 1:2. The solution was heated to 90°C for 2 hours, with stirring. The mixture was then allowed to settle, and the solution was recovered for further use.

**EXAMPLE 20**

Preparation of $VO(OC_4H_9)_3$

278 ml of butyl alcohol (concentration = 10.8 M) was added dropwise to 100 ml of a solution of $VOCl_3$ in heptane (concentration = 1.0 M) in a Fisher-Porter bottle. The solution, initially yellow, turned a translucent brown. The solution was heated to 60°C for 1 hour, and then sparged with $N_2$ to remove byproduct HCl. The product concentration was 0.78M.

**EXAMPLE 21**

Catalyst Preparation

Into a 3-neck round bottom flask was placed 12.8 ml of a solution of $VO(OC_4H_9)_3$ prepared as described in Example 3 (the corresponding concentration was 10 millimoles), and heptane (50 milliliters).

12.8 ml of a solution of $ZnCl_2 \cdot 2Al(CH_2CH_3)_3$ prepared as described in Example 19 in heptane (10 mmol Zn) was added dropwise, with stirring, over 30 minutes at room temperature. The solution turned brown and a lighter brown precipitate formed.

Then 6.29 ml of a solution of ethyl aluminum dichloride in heptane (10 mmol Al) was added slowly with stirring for 30 minutes at room temperature. There was no observable change in the appearance in the flask. Then 16.2 ml of a solution of butyl magnesium bis trisilylamide in heptane (5 mmol) was added slowly with stirring for 30 minutes at room temperature. There was no observable reaction except that the solid precipitate appeared denser and darker brown, and the solution was light brown.

2 ml of a 1.0 molar solution of $TiCl_4$ in heptane was then added slowly, with stirring.

The catalyst was filtered from the flask and recovered as a dark brown powder which was washed with 150 ml of heptane 5 times.

**EXAMPLE 22**

Catalyst Preparation

Into a 3-neck round bottom flask in an ice bath was placed 10 ml of a heptane solution of $VO(OC_4H_9)_3$ (the corresponding concentration was 10 millimoles), and heptane (50 milliliters).

30.8 ml of a solution of $ZnCl_2 \cdot 2Al(CH_2CH_3)_3$ in heptane (24 mmol Zn) was added dropwise, with stirring, over 30 minutes at room temperature. The solution turned brown and a lighter brown precipitate formed.

4 ml of a 1.0 molar solution of $TiCl_4$ in heptane was then added dropwise, with stirring. The reaction slurry turned darker brown.

The catalyst was filtered from the flask and recovered as a dark brown powder which was washed with 120 ml of heptane 4 times.

**EXAMPLE 23**

Catalyst Preparation

Into a 3-neck round bottom flask was placed 32.4 ml of a solution of BMSA (the corresponding concentration was 10 millimoles), and heptane (50 milliliters).

18.9 ml of a solution of ethyl aluminum dichloride in heptane (30 mmol Al) was added slowly with stirring for 40 minutes at room temperature. A white precipitate was observed to form.

5 ml of a solution of $TiCl_4$ in heptane (5 mmol) was then added over 60 minutes, with stirring. An orange-brown precipitate was observed to form. The solution was chilled by placing the flask in an ice bath.

7.5 ml of a heptane solution of $VO(OC_4H_9)_3$ (7.5 mmol) was then added slowly. The precipitate was observed to turn a brownish color.

Then, 3.8 ml of a solution of ethyl aluminum dichloride (5 mmol Al) was added, and the slurry was stirred at room temperature for 30 minutes. No observable reaction occurred.

The catalyst was filtered from the flask and was washed with 125-150 ml of heptane 3 times.

**EXAMPLE 24**

Catalyst Preparation

Into a 3-neck round bottom flask was placed 32.4 ml of a solution of BMSA (the corresponding concentration was 10 millimoles), and heptane (50 milliliters).

12.58 ml of a solution of ethyl aluminum dichloride in heptane (20 mmol Al) was added slowly with stirring for 30 minutes at room temperature.

5 ml of a solution of $TiCl_4$ in heptane (5 mmol) was then added over 30 minutes, with stirring.

Then, 19.23 ml of a solution of $ZnCl_2{\cdot}2Al(CH_2CH_3)_3$ in heptane (15 mmol Zn) was added dropwise, with stirring, over 30 minutes at room temperature. The solution turned into a dark gray slurry, which was chilled by placing the flask in an ice bath.

7.5 ml of a heptane solution of $VO(OC_4H_9)_3$ (7.5 mmol) was then added. A precipitate was observed to form. The solution had a brownish/gray color.

The catalyst was filtered from the flask and recovered as a dark brown powder which was washed with 125-150 ml of heptane 3 times.

**EXAMPLE 25**

This example demonstrates the preparation of a complex corresponding to the formula $ZnCl_2{\cdot}2Al(CH_2CH_3)_3$. To a dry, empty Fisher-Porter bottle in a dry box were added 46.96 grams of $ZnCl_2$ followed by 440 ml of a 1.56 molar solution of triethyl aluminum which was added through a cannula. The bottle was heated to 90°C for 1 hour and then allowed to cool to room temperature. Inspection two days later revealed a clear solution with a dark precipitate at the bottom, which was recovered by filtration. The complex was used without any further purification. The solution was understood to have a zinc concentration of about 0.34 molar and an aluminum concentration of about 0.69 molar. The concentration of the $ZnCl_2{\cdot}Al(CH_2CH_3)_3$ complex was assumed to be 0.34 molar.

**EXAMPLE 26**

A mixture of vanadium compounds was prepared by the following chemical reaction: $VOCl_3 + 1.5\ (C_4H_9OH) = VO(OC_4H_9)_2Cl + VO(OC_4H_9)Cl_2 + VO(OC_4H_9)_3 + HCl$.

This example demonstrates the preparation of the vanadium compounds.

9.42 ml of $VOCl_3$ (density 1.84 g/ml) was stirred together with 13.73 ml of butyl alcohol (density 0.810 g/ml). Then, 76.9 ml of heptane was added to make up a 1 molar solution corresponding to the stoichiometric representation $VOCl_{1.5}(OC_4H_9)_{1.5}$. The solution was sparged with low flow $N_2$ for 5 minute to remove any HCl gas produced by the above-depicted reaction.

**EXAMPLE 27**

This example demonstrates the preparation of a catalyst composition of the present invention.

To a dry, empty 3-neck flask equipped with a magnetic stirring bar was added 15 ml (15 mM in V) of a solution prepared in accordance with Example 2 and 50 ml of heptane. The contents were held at 70°C. Then 38.5 ml (13.1 mM in Zn and Al) of a solution of a complex of $ZnCl_2{\cdot}Al(C_2H_5)_3$ prepared in accordance with Example 25, which had been heated to 70°C, was added dropwise over a 1-hour period with stirring of the contents of the flask. Heat and smoke were generated by the addition. A slurry formed which, at the end of the addition of the zinc complex, was washed three times with 150 ml of heptane, decanted, filtered and dried.

**EXAMPLE 28**

All preparations of the catalysts and chemicals described herein to prepare the catalysts were carried out under a nitrogen atmosphere. Typically a 3 neck round bottom flask fitted with a paddle type stirrer was used for the catalyst preparations. Some of the chemical reactions to prepare the chemical precursors were prepared in Fisher Porter bottles.

Catalyst Run A:

To the round bottom flask was added 15 ml of the 1.0 M solution of the Vanadium compounds whose preparation was described in Example 26.
Next 50 mls of heptane were added.
With good stirring the following was added dropwise to the flask: 38.5 mls of a 0.34 M solution of the [Zn-Al] complex whose preparation was described in Example 25. The flask was then stirred for about 60 min. at ambient temperature and then filtered and washed 3 times with 150 mls each time of heptane. The catalyst was isolated by vacuum drying.

Catalyst Run B:

Using equipment equivalent to that described above, and

| | |
|---|---|
| $VOCl_3$ 1.0 M, | 10 mls |
| Heptane | 50 mls |
| Zn-Al complex | 25.6 mls |
| $VO(OiPr)_3$ 1.0M, | 10 mls |

The 25.6 mls of the solution of Zn-Al complex whose preparation was described in Example 25 was added dropwise to a solution of 1 mole of $VOCl_3$ in 60 ml of heptane, while the flask was kept cool in a beaker of water at ~20°C. A precipitate formed; the reaction mixture was stirred 60 minutes at ambient temperature. Next 10 mls of 1.0 M $VO(OiPr)_3$ solution was added slowly (iPr=isopropyl). The product was stirred 30 minutes at ambient temperature. The solid was allowed to settle and was filtered. The catalyst was washed 3 times with 150 mls each time of heptane. The catalyst was filtered and dried under vacuum.

Catalyst Run C:

To the 3 neck round-bottom flask fitted with a mechanical stirrer was added in the following order:
$ZnCl_2 \cdot 2AlEt_3$, 12.9 ml (10mM);
Heptane, 50 ml;
$VO(OiPr)_3$ 1M, 10 ml (10mM);
$ZnEt_2$ 1.0M, 10 ml;
$VOCl_3$ 1M, 10 ml
The vanadium solution was added dropwise to form a brown precipitate. This mixture was stirred for 30 min at ambient conditions, then 10 ml of $ZnEt_2$ (1M = 10 mM) was added followed by 10 ml of 1.0 M $VOCl_3$ solution (dropwise).

The catalyst was stirred 30 min at ambient temperature then allowed to settle. The catalyst was filtered and washed three time with 150 mls each time of heptane. The final catalyst was obtained by vacuum drying.

**EXAMPLE 29**

The catalysts of Runs A, B and C in Example 28, prepared as described above, were each used to homopolymerize ethylene under slurry polymerization conditions in a slurry polymerization reactor. Each of the polymerization reactions was conducted in 600 milliliters of isobutane at a temperature of about 93.3°C or 80°C and a total pressure adjusted to yield the ethylene concentrations noted in the following tables. The reactions were each conducted for about 60 minutes. Ethylene concentration in isobutane was about 4-20 mole percent and was maintained at this level at all times of the polymerization reaction by the constant feeding of ethylene into the reactor. About 40 milligrams of catalyst was used in each polymerization example.

The catalyst and a catalyst modifier (chloroform, Freon 113) were injected into the reactor at full reactor pressure, that is, pressure from $H_2$, isobutane and ethylene. About 0.5 milliliters of an aluminum alkyl cocatalyst (triethyl aluminum

or triisobutyl aluminum) was syringed into the reactor for each experiment as a 25 weight percent solution thereof in heptane. The mole ratio of hydrogen ($H_2$) to ethylene ($C^{=}_2$) used in the experiments was either 0.077:1 or 0.155:1. The mole ratio of modifier ($CHCl_3$), when used, to vanadium-containing composition

$$\frac{(\text{modifier})}{V}$$

was either 20:1 or 50:1. The mole ratio of cocatalyst to vanadium-containing composition ($\frac{Al}{V}$) ranged from 5:1 to 25:1, respectively.

Tables 3-5, below, show the mole ratios of the various materials that were used and the results that were obtained therewith in terms of catalyst reactivity (grams polyethylene/grams of total catalyst per hour of reaction time), the melt index (MI), and melt index ratio (MIR = HLMI/MI) of the polymer products relative to the particular catalyst system used.

Hydrogen was added to the reactor from a vessel of known volume (about 150 ml); the amount of hydrogen added was measured as $\Delta P$ , the change (decrease) in the hydrogen pressure in that vessel, measured in psi.

TABLE 3

Catalyst from Example 28, Run A

| Test No. | Temp. °C | Mole % $C_2H_4$ | $H_2$ ($\Delta P$) | Modifier | Reactivity | MI | MIR |
|---|---|---|---|---|---|---|---|
| 1 | 93.3 | 7 | 40 | None | 2,200 | 1.33 | 52. |
| 2 | 80. | 10 | 25 | $CHCl_3$ | 15,800 | 0.12 | 78. |
| 3 | 93.3 | 4 | 25 | $CHCl_3$ | 9,400 | 0.23 | 74. |
| 4 | 93.3 | 4 | 25 | Freon 113 | 6,000 | 0.46 | 66. |

Test No. 1 demonstrates that the catalyst in accordance with the present invention exhibits good reactivity even without the use of a modifier. The polymer product had a narrower molecular weight distribution than that obtained in Tests 2-4.

Test No. 2 demonstrates that the catalyst in accordance with the present invention exhibits very high reactivity when used with $CHCl_3$ as a modifier.

Test No. 3 demonstrates that the catalyst of the present invention exhibits very high activity even at very low ethylene concentrations.

Test No. 4 demonstrates that the catalyst of the present invention exhibits good activity using a different modifier (Freon 113, which is $CF_2ClCCl_2F$).

Tests 1-4 show that the present invention affords the operator the ability to tailor the molecular weight distribution to desired values via straightforward adjustments of conditions and feed materials.

TABLE 4

Catalyst from Example 28, Run B

| Test No. | Temp. °C | Mole % $C_2H_4$ | $H_2$ (ΔP) | Modifier | Reactivity | MI | MIR |
|---|---|---|---|---|---|---|---|
| 5 | 93.3 | 4 | 40 | $CHCl_3$ | 3,400 | 5.10 | 68. |
| | | | | premixed w/ TIBAL | | | |
| 6 | 93.3 | 7 | 75 | $CHCl_3$ | 11,430 | 2.63 | 68. |

Tests 5 and 6 demonstrate that preparing the catalyst of the present invention with two distinct vanadium-containing feed materials still provided catalyst exhibiting very good activity that produced polymers of medium to broad molecular weight distribution (as evidenced by the MIR values).

TABLE 5

Catalyst from Example 28, Run C

| Test No. | Temp. °C | Mole % $C_2H_4$ | $H_2$ (ΔP) | Modifier | Reactivity | MI | MIR |
|---|---|---|---|---|---|---|---|
| 7 | 93.3 | 4 | 40 | $CHCl_3$ | 4,880 | 0.81 | 73. |
| 8 | 93.3 | 4 | 40 | Freon 113 | 2,330 | 0.92 | 60. |
| 9 | 80. | 10 | 40 | $CHCl_3$ | 5,400 | 2.71 | 62. |

Tests 7-9 demonstrated catalysts according to the present invention having high reactivity. Comparison of Tests 1-9 demonstrates the ability to adjust the MI higher or lower, as desired, as well as broader or narrower molecular weight distribution (as measured by the MIR), with reaction conditions including the choice of modifier. The catalysts of the present invention surprisingly exhibit desirably high reactivity even at higher hydrogen concentrations.

## Claims

**1.** A catalyst comprising the product obtained by admixing

(a) a vanadium composition of the formula:

$$VX_b(OR)_{a-b}$$

wherein X is halogen, R is hydrocarbyl having 1 to 18 carbon atoms, a is the valence of vanadium and is 3 or 4 and b is 0 or an integer from 1 to a,

$$VOX^1_c(OR^1)_{3-c}$$

wherein $X^1$ is halogen, $R^1$ is hydrocarbyl having 1 to about 18 carbon atoms and c is 0 or an integer from 1 to 3, or

$$VOX^2_2$$

wherein $X_2$ is halogen; and
(b) one or more activator compounds having the formula:

$$ZnX^2_2 \cdot 2AlR^2_3$$

wherein $X^3$ is halogen and $R^2$ is hydrocarbyl having from 1 to about 12 carbon atoms;

$$MR^3_dX^4_{3-d}$$

wherein M is aluminum or boron, $X^4$ is halogen, $R^3$ is hydrocarbyl having 1 to about 12 carbon atoms and d is 0 or an integer from 1 to 3,

$$Al_2R^4_3X^5_3$$

wherein $R^4$ is hydrocarbyl having 1 to about 12 carbon atoms and $X^5$ is halogen, or

$$MgR^5_eY_{2-e}$$

wherein $R^5$ is hydrocarbyl having 1 to about 12 carbon atoms, Y is halogen or has the formula $OR^6$ wherein $R^6$ is hydrocarbyl having 1 to about 12 carbon atoms or Y is a silyl amide having the formula $N(SiR^6_3)_2$ wherein $R^6$ is hydrocarbyl having 1 to about 12 carbon atoms and e is 0, 1 or 2.

**2.** The catalyst of Claim 1 further comprising the product obtaining by admixing:

(c) a zirconium composition having the formula:

$$ZrX^5_f(OR^7)_{4-f}$$

wherein $X^5$ is halogen, $R^1$ is hydrocarbyl having 1 to about 18 carbon atoms and f is 0 or an integer from 1 to 4.

**3.** The catalyst of either of Claims 1 or 2 further comprising the product obtaining by admixing:

(d) a titanium composition having

(i) the formula

$$TiX^6_g(OR^8)_{h-g}$$

wherein $X^6$ is halogen, $R^8$ is hydrocarbyl having 1 to about 18 carbon atoms, h is the valence of titanium and is 3 or 4 and g is 0 or an integer from 1 to h,
(ii) having been obtained by admixing said titanium composition (i) with $MgX^7_2 6H_2O$ and Mg metal wherein $X_7$ is halogen, or
(iii) having been obtained by admixing said titanium composition (i) with a compound having the formula:

$$R^9\text{-Mg-N}(\text{-}R^{11})\text{-Si}(R^{10})_3 \text{ or}$$

$$R^9\text{-Mg-N}(\text{-}R^{11})\text{-Si}(R^{10})_2\text{-N}(\text{-}R^{11})\text{-Mg-}R^9$$

wherein $R^9$ is straight or branched alkyl having 1 to 18 carbon atoms or aryl having 6 to 14 carbon atoms, $R^{10}$ is hydrogen, straight or branched alkyl having 1 to 18 carbon atoms or aryl having 6 to 14 carbon atoms and $R^{11}$ is straight or branched alkyl having 1 to 18 carbon atoms, aryl having 6 to 14 carbon atoms, or -$Si(R^{10})_3$, and all $R^{10}$, $R^{11}$ and $R^{12}$ groups are the same or different.

**4.** The catalyst of any of Claims 1, 2 or 3 wherein R, $R^1$, $R^2$, $R^3$, $R^4$, $R^5$, $R^6$, $R_7$ and $R^8$ are each independently alkyl, cycloalkyl, aryl, aralkyl or alkaryl.

**5.** The catalyst of Claim 4 wherein R, $R^1$, $R^2$, $R^3$, $R^4$, $R^5$, $R^6$, $R^7$ and $R^8$ are each independently alkyl of 1 to 6 carbon atoms; and X, $X^1$, $X^2$, $X^3$, $X^4$, $X^5$ and Y are each chlorine.

**6.** The catalyst of Claim 5 wherein said vanadium composition is $VCl_3$, $VCl_4$, $VOCl_2$, $VOCl_3$, $VO8oOC_3H_7)_3$ or $VO(OC_4H_9)_3$; said activator compound is $ZnCl_2 \cdot 2Al(C_2H_5)$, $AlCl_2(C_2H_5)$, $AlCl(C_2H_5)_2$, $C_2h_5BCl_3$, $(C_2H_5)_3Al_2Cl_3$, $(C_4H_9)_2Mg$, $C_4H_9MgC_2H_5$, $C_4H_9MgN(Si(CH_3)_3)_2$ or $Zn(C_2H_5)_2$; said zirconium composition is $ZrCl_4$, $ZrCl_2(OC_4H_9)_2$, $Zr(OC_3H_7)_4$, $Zr(OC_4H_9)_4$; and said titanium composition is $Ti(OC_4H_9)_4$ or $TiCl_4$.

**7.** An olefin polymerization catalyst system comprising:

(a) a catalyst in accordance with any of the preceding claims and
(b) a co-catalyst.

**8.** The olefin polymerization catalyst system of Claim 7 wherein said co-catalyst is a metal alkyl, metal alkyl hydride, metal alkyl halide or metal alkyl alkoxide.

**9.** The olefin polymerization catalyst system of Claim 8 wherein said metal is aluminum, boron, zinc or magnesium; and said alkyl has 1 to 12 carbon atoms.

**10.** The olefin polymerization catalyst system of Claim 9 wherein said co-catalyst is triethyl aluminum or triisobutyl aluminum.

**11.** The olefin polymerization catalyst system of Claim 10 further comprising a modifier having the formula:

$$M^1H_iX^8_{j-i}$$

wherein $M^1$ is Si, C, Ge or Sn, $X^8$ is halogen, i is 0, 1, 2 or 3 and j is the valence of $M^1$.

**12.** The olefin polymerization catalyst system of Claim 11 wherein said modifier has the formula:

$$R^{13}_kCX^9_{4-k}$$

wherein $R^{13}$ is hydrogen or an unsubstituted or halogen-substituted hydrocarbon having 1 to 6 carbon atoms, $X^9$ is halogen and k is 0, 1 or 2.

**13.** The olefin polymerization catalyst system of Claim 12 wherein said modifier is $CCl_4$, $CH_2Cl_2$, $CBr_4$, $CH_3CCl_3$, $CF_2ClCCl_3$, $CHCl_3$, $CFCl_3$ or $CFCl_2CF_2Cl$.

**14.** A process for producing a polymer which comprises contacting a feed material of ethylene one or more alpha-olefins or admixtures thereof with the catalyst system of any of Claims 7-13 under polymerization conditions effective to polymerize said feed material.

**15.** The process of Claim 14 wherein said polymer is a homopolymer of ethylene, a homopolymer of an alpha-olefin, a copolymer or a copolymer of two or more alpha-olefins, said alpha-olefins having 3 to 12 carbon atoms.

**16.** The polymer produced by the process of Claims 14-16.

FIG. 1

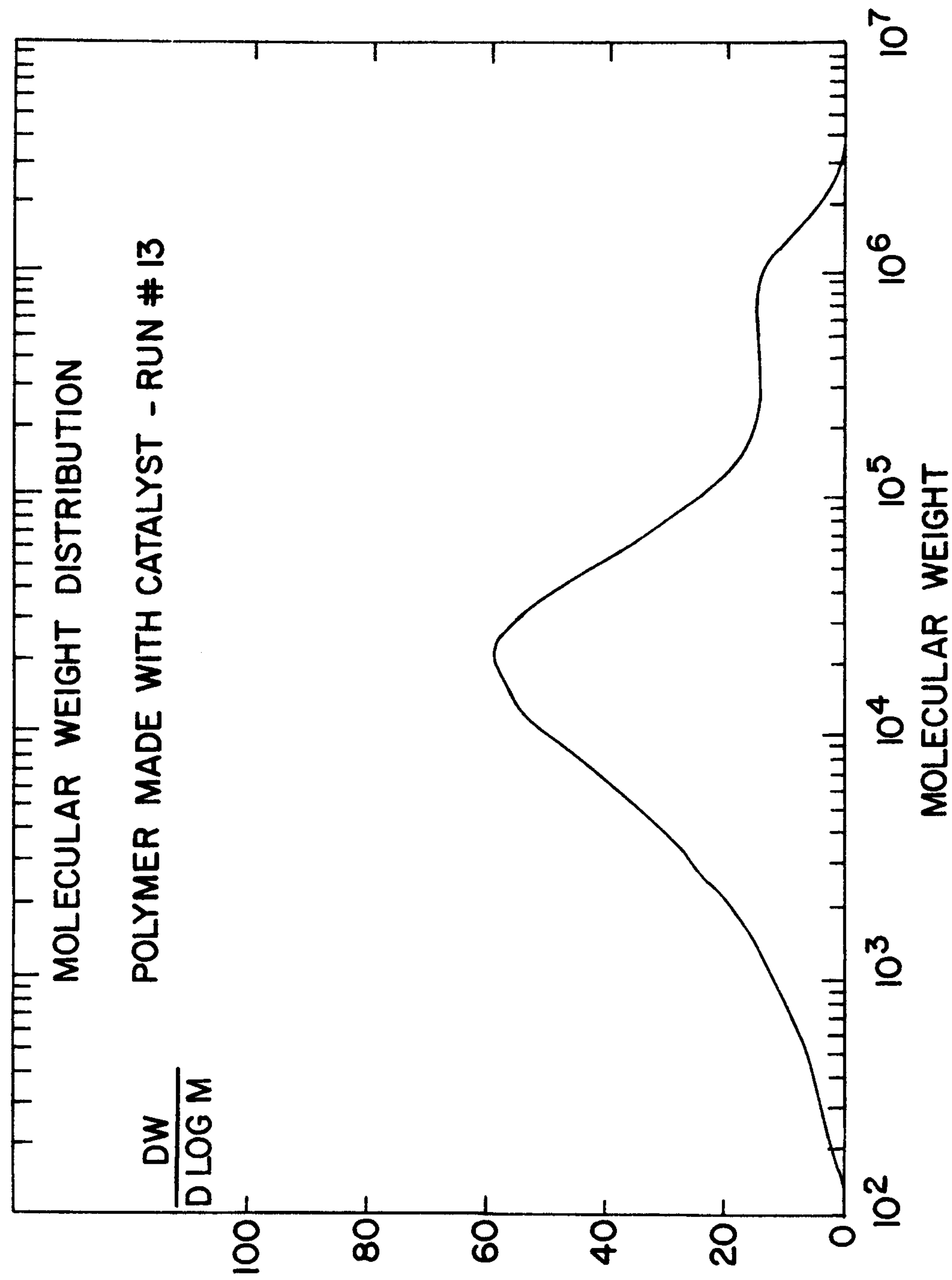
MOLECULAR WEIGHT DISTRIBUTION
POLYMER MADE WITH CATALYST - RUN # 13
DW / D LOG M
0
20
40
60
80
100
10^2
10^3
10^4
10^5
10^6
10^7
MOLECULAR WEIGHT

FIG. 2

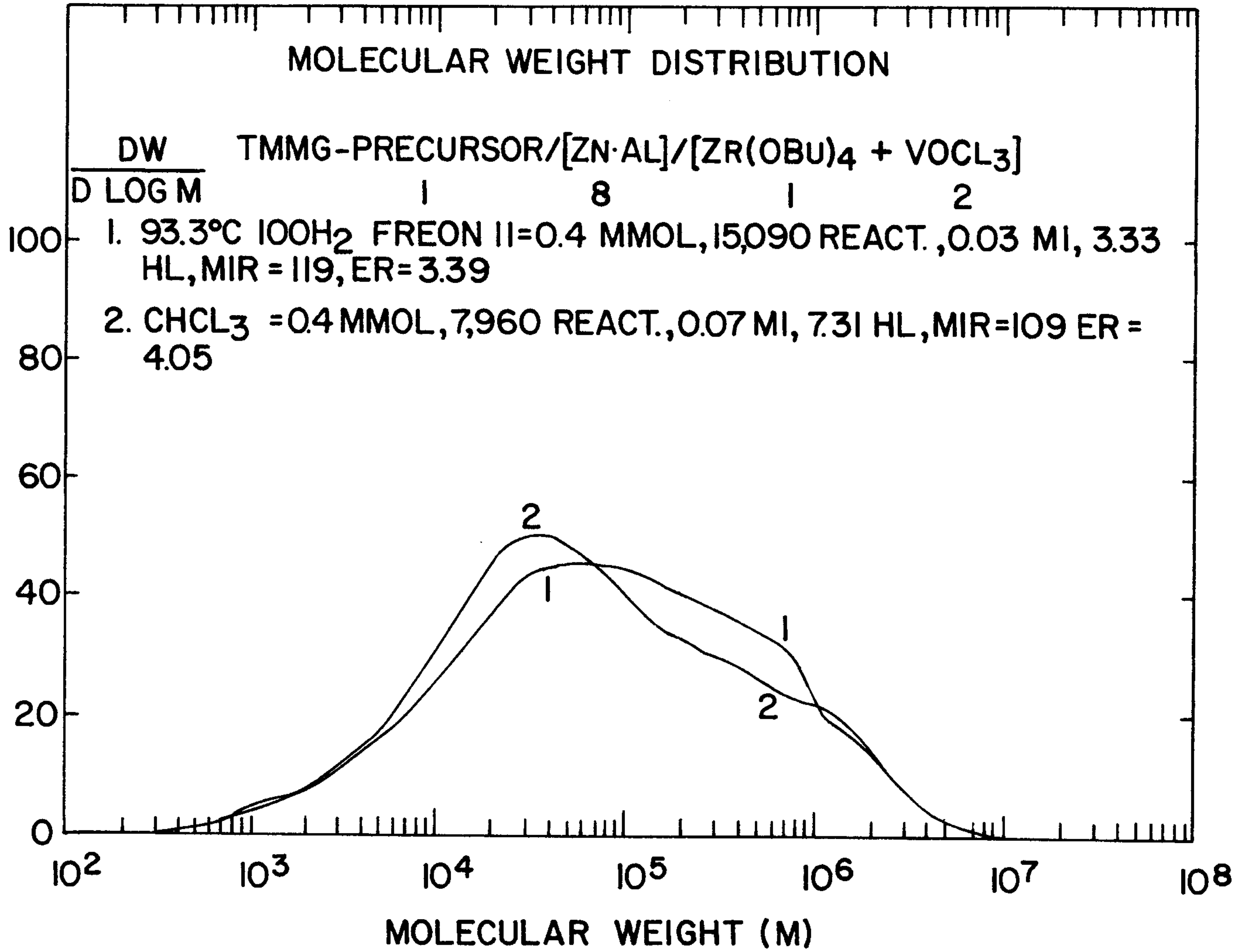
MOLECULAR WEIGHT DISTRIBUTION
DW / D LOG M
TMMG-PRECURSOR/[ZN·AL]/[ZR(OBU)4 + VOCL3]
1 8 1 2
1. 93.3°C 100H2 FREON 11=0.4 MMOL, 15,090 REACT., 0.03 MI, 3.33 HL, MIR = 119, ER= 3.39
2. CHCL3 =0.4 MMOL, 7,960 REACT., 0.07 MI, 7.31 HL, MIR=109 ER = 4.05
100
80
60
40
20
0
2
1
1
2
10^2
10^3
10^4
10^5
10^6
10^7
10^8
MOLECULAR WEIGHT (M)

European Patent Office

# EUROPEAN SEARCH REPORT

Application Number
EP 94 11 0902

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 204 304 (KUO ET AL.)<br>* the whole document *<br>--- | 1,4-16 | C08F10/00<br>C08F4/68 |
| X | EP-A-0 538 554 (QUANTUM CHEMICAL CORPORATION)<br>* the whole document *<br>--- | 1,2,4-16 | |
| X | EP-A-0 314 165 (UNION CARBIDE CORPORATION)<br>* the whole document *<br>--- | 1,2,4-16 | |
| X | WO-A-91 14714 (QUANTUM CHEMICAL CORPORATION)<br>* the whole document *<br>--- | 1,3-16 | |
| X | EP-A-0 497 102 (BASF AKTIENGESELLSCHAFT)<br>* the whole document *<br>--- | 1,3-10, 14-16 | |
| X | EP-A-0 362 814 (SHOWA DENKO KABUSHIKI KAISHA)<br>* examples *<br>--- | 1,6-10 | TECHNICAL FIELDS SEARCHED (Int.Cl.6) |
| X | EP-A-0 286 148 (STAMICARBON B.V.)<br>* the whole document *<br>--- | 1,3-6 | C08F |
| X | US-A-4 154 701 (MELQUIST)<br>* claims *<br>----- | 1-6 | |

The present search report has been drawn up for all claims

| Place of search | Date of completion of the search | Examiner |
|---|---|---|
| THE HAGUE | 25 November 1994 | Kaumann, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)